# EUROPEAN PATENT APPLICATION

(11) **EP 0 940 785 A2**
(43) Date of publication of application: **08.09.1999**
(21) Application number: 99104208.6
(22) Date of filing: 02.03.1999
(51) Int. Cl.: G07F 19/00, G07F 7/10

(54) **Information processor**

(30) Priority: 05.03.1998 JP 5310998
(71) Applicant: Hitachi, Ltd., Chiyoda-ku, Tokyo 101-8010 (JP)
(72) Inventor: Osaki, Nobuyuki, Yokohama-shi (JP); Kagami, Akira, Sagamihara-shi (JP); Muramatsu, Akira, Kawasaki-shi (JP)
(74) Representative: Strehl Schübel-Hopf & Partner

(57) **Abstract**

A fee settlement system and apparatus which can offer and acquire pay services based on computers even from an off-line computer terminal to a computer or organization (referred to as the pay operation executor, hereinafter) (115) having a payment means to providers of the pay services, and which can also commonly use a plurality of services. When executing a pay service from an off-line terminal (111), the apparatus creates bill information (107-109) including at least a money amount for the pay operation and its payee, stores it in a computer (101), and when a computer on-line terminal (113) is connected to the pay operation executor (115), sends the bill information to the pay operation executor to cause the pay operation executor to complete the payment.

## Description

### BACKGROUND OF THE INVENTION

The present invention relates to fee settlement systems wherein a computer (information processor) is connected to another computer to receive a pay service and more particularly, to a fee settlement system which can eliminate the need for a party computer to have a settlement function.

Money or cash conventionally paid in exchange for receiving a service has required a lot of handling cost including insurance cost paid for its custody or safekeeping, delivery or burglarproofness. Further, as the information orientation of social infrastructure is advanced, there has been a tendency that the opportunity of using computers in some manner in services to be offered is increased. For this reason, in money settlement of the virtual world, such situations will more often occur that physical cash is less used.

In such circumstances, for the purpose of realizing flexible adaptation of offer of information-oriented services, reduction of handling cost involved by cash, and offer of convenience to users; some of credit or prepaid card realizing cashless payment and electronic money recently showing signs of its spread have been already put in practical use.

One of prior art electronic moneys is disclosed in International Application Number WO91/16691 (JP-A-5-504643).

Meanwhile, spread of these techniques requires a computer terminal realizing a service to have a money settling means, though the spread can realize cashless payment. In other words, it is necessary for the computer terminal as a service provider to be connected to a host computer having a money settling function via a network or for the terminal itself to has its own money settling function. In general, however, the use and operation of the network involve a lot of cost. Further, in order for the computer terminal itself as the service provider to have the money settling function, in addition to the service providing function, additional cost is required. As a result, it is considered difficult to carry out offer of low value-added service or offer of service based on low-function terminals such as portable terminals, which will be increasingly spread in future.

In order to remove the difficulties, such a technique is required for eliminating the need for the service provider terminal to utilize the network and for realizing such a money settling mechanism that can be easily introduced even in the low function terminal. However, such a technique as to be sufficiently employed in such applications has not existed so far.

In order to receive such service that a fee has to be paid every time, even when the service offer is carried out by a manned system or unmanned one, the service must be offered from the computer terminal which has a settlement function of settling or paying the fee or which can be connected to a computer having at least such a settling function.

However, such a terminal becomes highly costly in its installation and distribution. Since a tendency is estimated of increasingly spreading unattended service on computer without human intervention, the offer of pay service cannot use an off-line terminal without the settlement function nor a simple portable terminal.

In addition, now that acceleration of the information orientation of social infrastructure advances, there will be expected an appearance of such a high-functioned service provider means as to offer a plurality of services from terminals operated by different, independent organizations. In this case, as means for increasing the settling opportunity, each of the terminals is estimated to have its own settlement means based on the associated service manager or to have all settlement means based on the respective service managers. This means that too many settlement means are provided, which disadvantageously results in that the system development and maintenance of the terminals and host computer will involve a lot of labor and cost.

### SUMMARY OF THE INVENTION

In view of such circumstances, it is therefore an object of the present invention to provide a fee settlement system and apparatus which can offer and acquire pay services based on computers even from an off-line computer terminal to a computer or organization having a payment means to providers of the pay services, and which can also commonly use a plurality of services.

In accordance with the present invention, the above object is attained by providing an information processing apparatus which can process one or more operations and wherein information on a pay service is received from another information processing apparatus, and information about a consideration or value for the received pay operation is stored in a predetermined area. In this connection, the value information may be stored in a memory physically separated from the information processing apparatus. A plurality of the information processing apparatuses may store information in the single memory. The value information may be stored in another information terminal.

In a further aspect of the present invention, there is provided an information processing apparatus which comprises means for receiving information on a pay operation from a terminal connected thereto, means for creating information about a value corresponding to the received pay operation information, means for storing the created information in a predetermined area, and means for transmitting the stored information to another information processing apparatus having a settlement function when connected thereto.

In another aspect of the present invention, there is provided an IC card which receives information on a pay operation from a terminal connected thereto, creates information on a value corresponding to the received pay operation information, stores the created information in a predetermined area, and stores the stored information in a program from which the information is to be sent.

For settling operation, the information processing apparatus is connected to the IC card so that the IC card receives information on the pay operation from a terminal connected thereto, the information processing apparatus information about the value created according to the accepted pay operation information and stored in the IC card, and performs the settlement corresponding to the accepted information.

Further, there is provided an information processing apparatus which comprises memory means for storing negotiable information having a money value, means for receiving information on a pay operation from a terminal connected thereto, means for creating bill information corresponding to a value corresponding to the accepted pay operation information, means for storing the created bill information and the negotiable information in a predetermined area, and means for sending the stored bill information and negotiable information to another information processing apparatus having a settlement function when connected thereto.

Furthermore, there is provided an information processing apparatus which comprises means for sending information on a pay operation to an IC card connected thereto, means for receiving information on a value created according to the pay operation information received by the IC card, means for storing the received value information, and means for sending the stored value information to an information processing apparatus capable of settling the pay operation.

Also included in the present invention is an information processing apparatus which receives a pay operation (service) from a service provider terminal, receives a value corresponding to the pay operation from a terminal connected with information processing apparatuses or IC cards associated with two or more payees for value payment, and performs the pay operation over the plurality of payees.

The types of pay services (or terminals) may be made to be previously associated with the types of negotiable information pooled so that, when a service provider having a terminal has an account at a bank A, the settlement can be completed in the bank A. For example, a negotiable information (check) for the bank A may be used.

Of the stored information, only such information as be able to be settled in the connected terminal may be settled. Further, the value information (bill information) may be created at the service provider terminal and sent to the IC card. In this case, a copy of the value information may be left at hand.

Further, when the settlement is completed, not only the value information may be deleted but also already-paid information (receipt) may be left in the IC card.

### BRIEF DESCRIPTION OF THE DRAWINGS

Fig. 1 shows a money settlement system in accordance with a first embodiment of the present invention;
Fig. 2 shows bill information upon an entrance of a theater or movie house as an example in the first embodiment of the present invention;
Fig. 3 is a system for embodying the entrance of the movie house in Fig. 2;
Fig. 4 is a flowchart for explaining a flow of operations in a card-side application 102 in the first embodiment of the invention;
Fig. 5 is a flowchart for explaining a flow of operations in a bill information creating means 105 in the first embodiment of the invention;
Fig. 6 is a flowchart for explaining a flow of operations in a terminal-side application 113 in the first embodiment of the invention;
Fig. 7 is a flowchart for explaining a flow of operations in a bill information delivering means 110 in the first embodiment of the invention;
Fig. 8 is a flowchart for explaining a flow of operations in a payment client 114 in the first embodiment of the invention;
Fig. 9 is a flowchart for explaining a flow of operations in a payment procedure executing means 116 in the first embodiment of the invention;
Fig. 10 is a flowchart for explaining a flow of operations in a paying phase upon the entrance of the movie house in accordance with the first embodiment of the present invention;
Fig. 11 is a flowchart for explaining a flow of operations in the paying phase upon the entrance of the movie house in the first embodiment of the invention;
Fig. 12 is a diagram for explaining a money settlement system in accordance with a second embodiment of the present invention;
Fig. 13 is a flowchart for explaining a flow of operations in a bill information creating means 105 in the second embodiment of the invention;
Fig. 14 is a flowchart showing a flow of operations in a bill-information creation condition managing means 1201 in the second embodiment of the invention;
Figs. 15A and 15B show an example of bill information creating condition in the second embodiment of the invention as well as an example of bill information stored in an IC card;
Fig. 16 shows an arrangement of a money settlement system in accordance with a fourth embodiment of the present invention;
Fig. 17 is a diagram for explaining an ATM terminal 314 in a sixth embodiment of the present invention;
Fig. 18 is a flowchart for explaining a flow of operations in a payment client 316 and ATM applications 313 and 315 controlled by a payment managing means 1701;
Fig. 19 is a diagram showing a money settlement system in accordance with a fifth embodiment of the present invention;
Fig. 20 is a diagram for explaining an IC card and off-line terminals in a seventh embodiment of the present invention;
Fig. 21 is a diagram showing a money settlement system in accordance with an eighth embodiment of the present invention;
Fig. 22 is a flowchart for explaining the operations of a payee value creating means 2106 in the eighth embodiment of the invention;
Fig. 23 is a diagram showing a money settlement system in accordance with a ninth embodiment of the present invention;
Fig. 24 is a flowchart for explaining the operations of a payee value creating means 2304;
Fig. 25 is a diagram showing a money settlement system as another form of the ninth embodiment;
Fig. 26 is a diagram showing a money settlement system as a further form of the ninth embodiment;
Fig. 27 is a flowchart for explaining the operations of a bill information delivering means 110; and
Figs. 28A and 28B show an embodiment of the IC card in the present invention.

### DESCRIPTION OF THE PREFERRED EMBODIMENTS

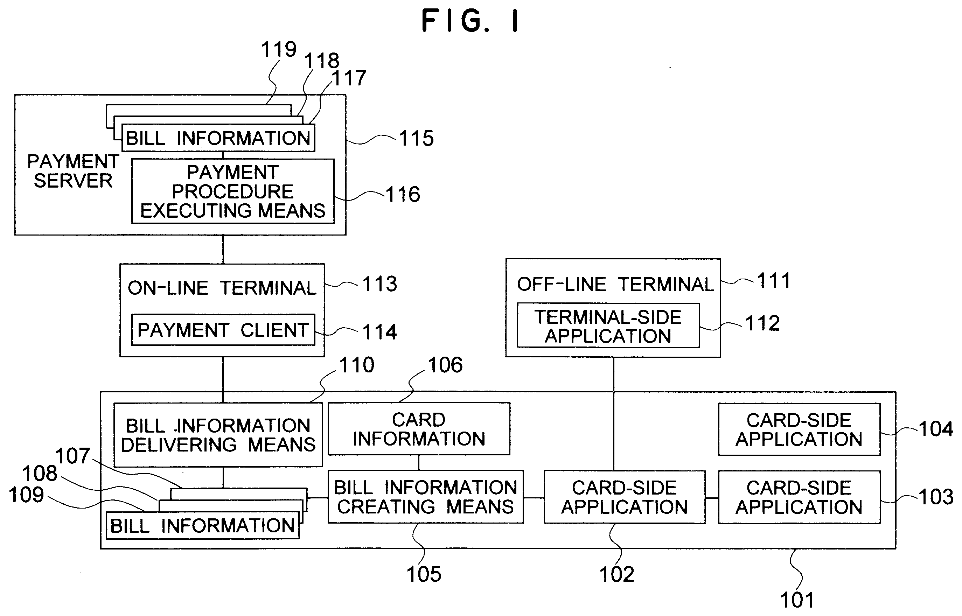

Embodiments of the present invention will be explained with reference to attached drawings. Referring first to Fig. 1, there is shown a money settlement system in accordance with a first embodiment of the present invention, including a computer 101 which can build at least one application therein and execute it. The computer 101 may have an arbitrary configuration. In the specification, however, explanation will be made in connection with an IC card capable of building and execute at least one application as a typical example of the computer 101.

The computer 101 may be a portable information terminal such as a personal computer, a workstation or a personal digital assistant (PDA), so long as it has such function as mentioned above.

Application programs 102 to 104 are built on the IC card 101 and are also sometimes called the card-side applications 102 to 104. The card-side application 102 has a function of communicating with the terminal-side application 112 as a program present in an off-line terminal 111 to perform a specific pay operation and a function of communicating with a bill information creating means 105 present in the IC card 101 to perform transfer of information necessary for bill information creation (to be explained later) thereto and therefrom.

Although 3 of the card-side applications each having such functions as mentioned above are provided in Fig. 1, the number of card-side applications is not necessarily limited to 3. Even an application present in the card is not always required to have an ability to communicate with the bill information creating means 105, so long as it does not use the bill information creating function 105.

The terminal 111 is a computer which can communicate with the IC card 101 and can eliminate the need to have a means for being connected always with a payment server 115 as a computer having a payment function.

Hereinafter, such a computer terminal as not to be required to be always connected with the payment server 115 will be called the off-line terminal; while, such a computer terminal as to be required to be always connected therewith will be called the on-line terminal. A communication means between the IC card and terminal may be of an arbitrary type such as a contact type or non-contact type, so long as it can perform information (data) transfer between the IC card and terminal. In the following explanation, a contact type of IC card is assumed for simplicity of explanation and such a type of IC card is merely given as the IC card.

The terminal-side application 112 is a program which is present in the off-line terminal 111 to communicate with the card-side application 102 to perform a specific pay operation, which program will be referred to as the terminal-side application 112, hereinafter. The term "pay operation" as used herein means such an operation that, when the card-side application 102 communicates with the terminal-side application 112 to perform a specific operation, the holder of the IC card 101 has a obligation to pay a fee to a specific payee due to the execution of the specific operation.

For example, when the card-side application 102 communicates with the terminal-side application 112, the holder of the IC card 101 can play a TV game. In this connection, a fee for the use of the TV game is to be paid depending on the contents (game time, score, etc.) of the game. Or when the card-side application 102 communicates with the terminal-side application 112, the holder can use the IC card 101 as a credit card. During the communication between the card-side application 102 and terminal-side application 112, the holder purchases a product on-line, conducts its specific operation for the purchase, and thus has a promise to pay it as its product charge next month. Such operations in the above cases are called the pay operation in the present embodiment.

The bill information creating function 105 has a means for communicating with the card-side applications 102 to 104 or terminal-side application 112, creates bill information 'including' at least a money amount, a payee and a detailed procedure for payment of the specified money amount to the payee, and stores the information in the IC card. The term 'including' as used herein means that information on the money amount, payee and payment means are only required to be managed and processed in a linked manner and are not always required to be a single piece of logical information as when these information are stored in a single file. Further, the payment procedure is such information which can be omitted when the system can handle only a fixed payment procedure where the IC card holder transfers from holder's account to a payee's account, as a matter of course. When such an expression that 'when the payment procedure is specified' is used in the following description means that the system is assumed to have variable and specifiable procedures, which may be omitted if necessary.

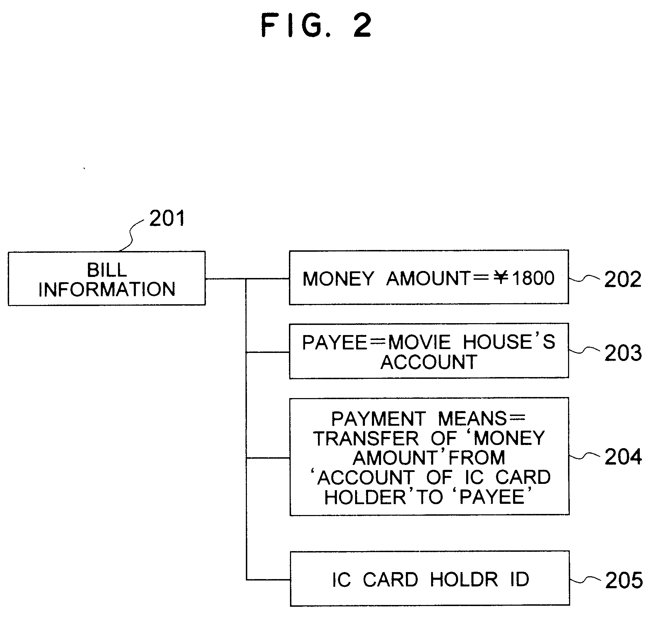

Fig. 2 shows an example of bill information 201 which includes money amount information 202, payee information 203 and payment means 204. Other information may be required depending on the payment system, in which case additional information is added to the bill information 201 as necessary. An example of the additional information is information 205. In this case, the additional information 205 indicates the identification (ID) of an IC card holder to identify the account number of a transfer originator when the money transfer between the accounts indicated by the additional information 205 is carried out.

The bill information 201 may be created each time the card-side application and terminal-side application are executed, or when the payee 203 and the payment means 204 are common, the money amount may sequentially added to the money amount information 202 of a piece of bill information 201 and be stored in the IC card as the common bill information 201.

Although the following explanation is made in connection with a case where the bill information creating means 105 communicates only with the card-side application to obtain information from the card-side application, the bill information creating means 105 may obtain, from the terminal-side application, information obtained from the card-side application.

The payment may sometimes require additional information depending on the payment method. For example, there is a case where the IC card 101 itself or ID information for identification of the holder of the IC card 101 is used in the payment as when account transfer is used in the payment. The ID information is only required to be prepared by a single piece in the IC card 101. In this way, the additional information required for specification of the payment procedure may include card information 106. However, there is a case where the card information 106 is not used depending on the payment procedure. Or when information necessary for specification of the payment procedure is included in the card-side application, the card information 106 may be omitted as necessary.

Bill information 107 to 109 are created when the card-side applications 102 to 104 perform their pay operations respectively, and are stored in the IC card 101.

The bill information delivering means 110 has a function of, when the IC card 101 is inserted into the on-line terminal 113, delivering whole or part of the bill information stored in the IC card 101 to the on-line terminal 113 and deleting the delivered bill information from the IC card. In this connection, the bill information to be delivered may be selected according to the type of the terminal-side application 113. The bill information processible by the connected on-line terminal 113 (with respect to the money payment) may be delivered.

The payment client 114 is a program which is operated within the on-line terminal 113 and has a function, when the IC card 101 is inserted into the terminal 113, of starting the bill information delivering means 110 within the IC card 101, accepting the bill information from the bill information delivering means 110 and delivering the information to the payment server 115. Although the payment server 115 is physically separated from the on-line terminal 113 in Fig. 1, the server 115 and terminal 113 may be provided as a physically integrated unit.

The payment server 115 is a computer which accepts the bill information from the payment client 114 of the on-line terminal 113 and performs the pay operation indicated in the accepted bill information. The pay operation is carried out by the payment procedure executing means 116 within the payment server 115. Bill information 117 to 119 indicate a state in which the bill information 107 to 109 accumulated in the IC card 101 are transferred to the payment procedure executing means 116 through the payment client 114 respectively and stored in the payment server 115.

The operation of the money settlement system in the present embodiment is roughly divided into two phases. In one of the phases, the card-side application 102 and terminal-side application 112 perform pay operation and its associated operations, which phase will be referred to as the pay execution phase, hereinafter. In the other phase, billing based on the pay execution phase and associated operations are carried out on the basis of the bill information created in the pay execution phase, which phase will be referred to as the billing phase, hereinafter. However, the distinction between these phases has no special intention and is made only to facilitate the explanation.

Details of the pay execution and billing phases will be explained in the following.

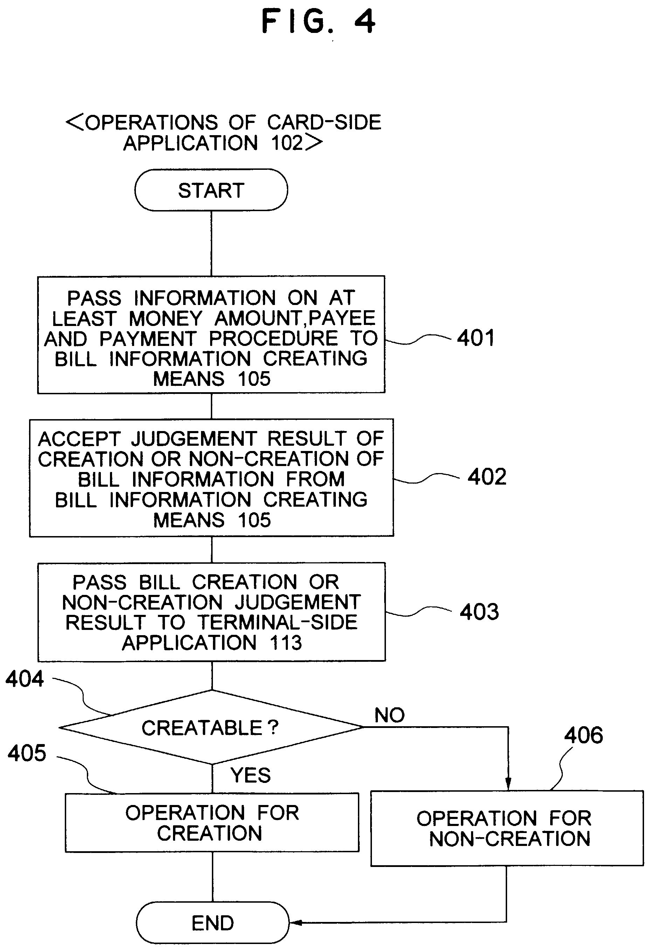

In the pay execution phase, the pay operation is carried out mainly by the card-side application 102, bill information creating means 105 and terminal-side application 113. The details of these operations will be explained with use of Figs. 4 to 6 respectively.

Shown in Fig. 4 is a flowchart for explaining a flow of the operations of the card-side application 102.

In a step 401, the card-side application 102 passes information about at least a money amount, a payee and a payment procedure to the bill information creating means 105. The information on the money amount, payee and payment procedure may be previously possessed in the card-side application 102; the card-side application 102 may receive such information possessed in the terminal-side application 112 therefrom; or such information may be information inputted from an input device to the terminal 113 or may be created by processing information inputted from an input device into the terminal 113 with use of the card-side application 102 or terminal-side application 112. How to possess such information as the money amount, payee and payment procedure can take various forms depending on the building of the pay execution application.

In a step 402, a judgement result indicative of permission or non-permission of creating bill information is obtained from the bill information creating means 105. In a step 403, the above judgement result is passed to the terminal-side application 113. When the terminal-side application 113 performs no special operation based on the judgement result, it is unnecessary to pass the result to the terminal-side application 113. In a step 404, if the judgement result indicates the permission of creating the bill information, then the control proceeds to a step 405. Otherwise, the control goes to a step 406. In the steps 405 and 406, predetermined operations are carried out for the permission and non-permission of creating the bill information respectively. After completing these steps, the card-side application 102 completes its operation. The operations of the steps 405 and 406 may also be determined according to the contents of the pay operation.

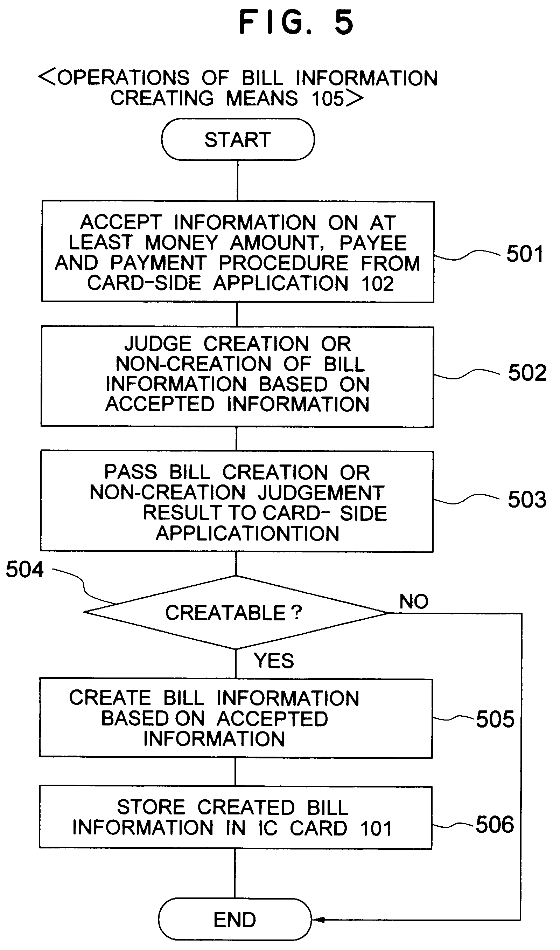

Fig. 5 is a flowchart for explaining a flow of operations in the bill information creating means 105.

In a step 501, the bill information creating means 105 receives information about at least the money amount, payee and payment procedure from the card-side application 102. The bill information creating means 105 judges in a step 502 whether or not the creation of the bill information is permitted on the basis of the received information. In this connection, the judgement may depend on the pay operation, suitable judgement may be applied to the specific pay operation or may be omitted if necessary (in which case, the operations of steps 502 to 504 are skipped). In the step 501, necessary information, in addition to the money amount, payee and payment means, may be arbitrarily added to the received information. In order to prevent the bill information creating means 105 from receiving a request of illegally creating the bill information from the card-side application, however, it becomes indispensable for the means 105 to receive information for certification or authentication of the card-side application. In this case, the permission or non-permission of creating the bill information may be determined in the step 502 on the basis of a judgement result of whether or not the card-side application is correctly asking to create the bill information based on the authentication result. When the card-side application is found already reliable at the time point of being built in the IC card 101 through its previous inspection, the authentication becomes unnecessary as a matter of course. In addition, it will be obvious that the authentication system can be realized by prior art techniques of encrypted data or password.

In the step 503, the bill information creating means 105 passes the bill creation judgement result to the card-side application 102. If the bill creation is possible as a result of a judgement result in a step 504, then the bill information creating means 105 proceeds to a step 505. If impossible, then the bill information creating means 105 terminates its operation.

In the step 505, the bill information creating means 105 creates bill information on the basis of the received information. As already mentioned above, the created information includes at least a money amount, payee and payment procedure. The bill information may be different information made for each call from the card-side application. Or when bill information to be newly made as well as bill information common in the payee and payment procedure are already present within the IC card 101, in place of creating new additional bill information, the money amount of the new bill information may be added to the money amount of the already-present bill information.

When storing the bill information made in a step 506 in the IC card 101, the bill information creating means 105 terminates its operation. With respect to the storage of the bill information in the IC card 101, the bill information may be collectively kept in the IC card 101 or in an own memory area of each card-side application. In the latter case, however, when it is desired for the bill information delivering means 110 (to be explained later) to send he bill information, it is necessary that the card-side application have a means for passing the bill information to the bill information delivering means 110. So long as the bill information delivering means 110 can have a means for passing the bill information to the bill information delivering means 110, the bill information may be stored in any place. Further, the bill information is managed and stored in such a manner that the bill information can be created only by the bill information creating means 105 and deletion of the bill information can be carried out only by the bill information delivering means 110. The former is for the purpose of preventing creation of unauthorized bill information, while the later is for the purpose of preventing avoidance of payment of the pay operation by incorrectly deleting the bill information. Authorization management of such creation and deletion of the bill information can be implemented by cryptography if necessary.

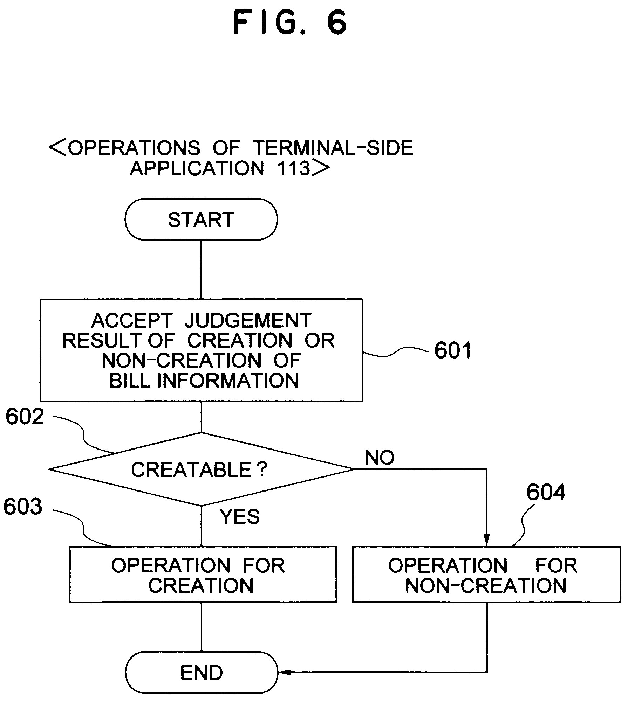

Fig. 6 is a flowchart for explaining a flow of operations in the terminal-side application 113.

In a step 601, the terminal-side application 113 receives a judgement result of creation or non-creation of bill information from the card-side application 102. In a step 602, when the creation of the bill information is judged as allowed on the basis of the result received in the step 601, the terminal-side application 113 goes to a step 603. When the creation of the bill information is judged as not allowed in the step 602, the terminal-side application 113 proceeds to a step 604. The operations of the steps 603 and 604 are predetermined operations when the creation of the bill information is allowed and not allowed respectively. After having executed these operations of the steps603 and 604, the terminal-side application 113 terminates its operation.

The operations of the card-side application 102, bill information creating means 105 and terminal-side application 113 in the pay operation execution phase have been explained in the foregoing.

Explanation will be next be made as to a paying operation phase. Operations in the paying operation phase are carried out mainly by the bill information delivering means 110, payment client 114 and payment procedure executing means 116, which will be explained below.

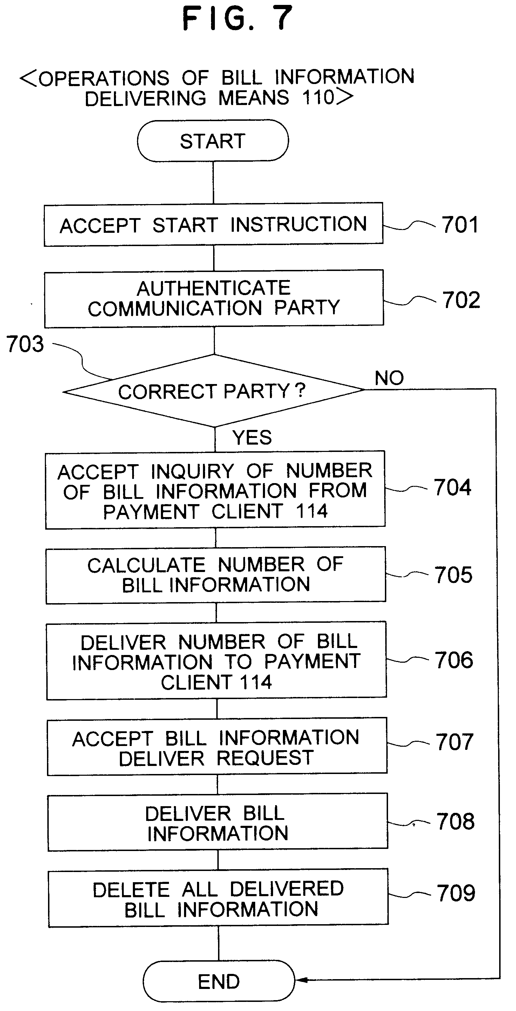

Shown in Fig. 7 is a flowchart for explaining a flow of operations in the bill information delivering means 110.

In a step 701, the bill information delivering means 110 accepts an instruction indicative of start of the operations of the bill information delivering means 110. At this time, the bill information delivering means 110 also accepts information for authentication of a party which issues the start instruction. In a step 702, the bill information delivering means 110 authenticates the communication party on the basis of the authentication information accepted in the step 701.

The authentication system may be realized by using a prior art authentication system such as cryptography. When the bill information delivering means 110 judges that the party is correct as a result of the authentication in the step 702, the means 110 proceeds to a step 704.

When the bill information delivering means 110 judges that the party is incorrect, the means 110 terminates its operation. In the step 704, the bill information delivering means 110 accepts an inquiry about the number of pieces of bill information stored in the IC card 101 from the payment client 114.

In a step 705, the bill information delivering means 110 examines the number of pieces of bill information stored in the IC card 101. In a step 706, the bill information delivering means 110 sends the number of bill information pieces found in the step 705 to the payment client 114. In a step 707, the bill information delivering means 110 accepts a request of delivering the bill information. In a step 708, the bill information delivering means 110 delivers all or some of the bill information pieces within the IC card 101 to the payment client 114. In a step 709, the bill information delivering means 110 deletes all the bill information pieces already delivered in the step 708 from the IC card 101. In this connection, as already explained above, the bill information can be deleted only by the bill information delivering means 110.

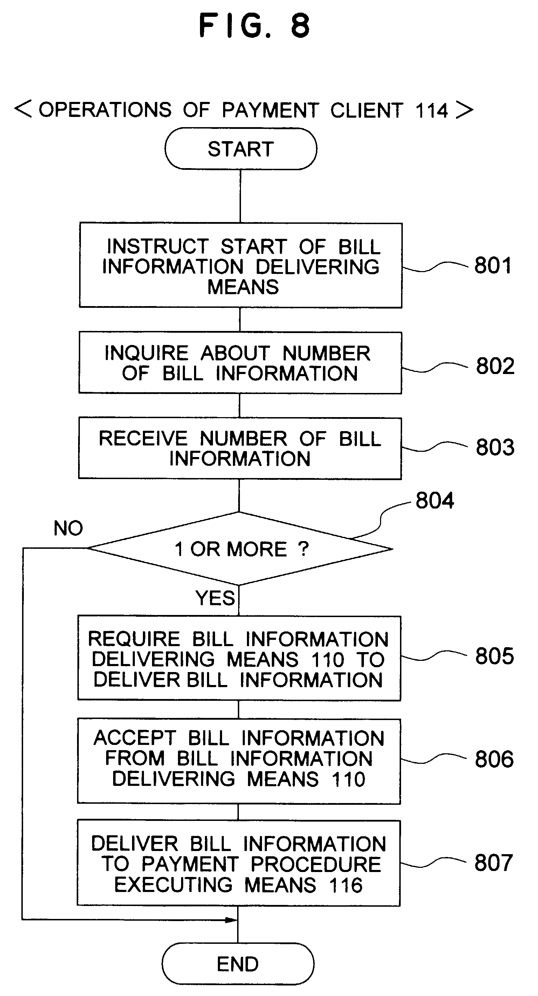

Fig. 8 is a flowchart for explaining the operations of the payment client 114.

In a step 801, the payment client 114 issues an instruction indicative of starting the means 110. At this time, the payment client 114 also delivers information for judgement of whether or not the party is correct to the bill information delivering means 110. The information is required to contain its contents which conform to the authentication system in the step 702 of the bill information delivering means 110. When it is judged in the step 702 of the bill information delivering means 110 that the party is incorrect based on the authentication, the payment client 114 cannot proceed to the subsequent step because the bill information delivering means 110 terminates its operation.

In a step 802, the payment client 114 inquires of the bill information delivering means 110 about the number of pieces of the bill information stored in the IC card 101. In a step 803, the payment client 114 accepts the number of bill information pieces from the bill information delivering means 110. In a step 804, the payment client 114 judges whether or not the accepted number of bill information pieces is one. In the case where the number of bill information pieces is one or more, the payment client 114 proceeds to a step 805. When the number of bill information pieces is zero, the payment client 114 terminates its operation.

In the step 805, the payment client 114 issues a request indicative of delivering the bill information in the IC card 101 to the bill information delivering means 110. In a step 806, the payment client 114 accepts the bill information from the bill information delivering means 110. In a step 807, the payment client 114 delivers the bill information accepted in the step 806 to the payment procedure executing means 116, at which stage the payment client 114 terminates its operation.

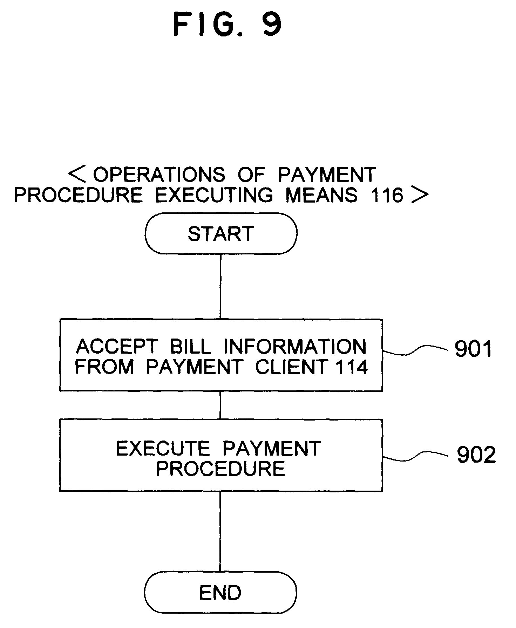

Fig. 9 is a flowchart for explaining the operations of the payment procedure executing means 116.

In a step 901, the payment procedure executing means 116 accepts the bill information from the payment client 114. In a step 902, the payment procedure executing means 116 executes its payment procedure on the basis of the accepted bill information. The execution of the payment procedure depends on the contents of the bill information. Thus the payment procedure execution may be realized by any concrete means, so long as the money amount of the bill information can be paid to the payee of the bill information. The operations of the paying operation phase have been explained in the foregoing.

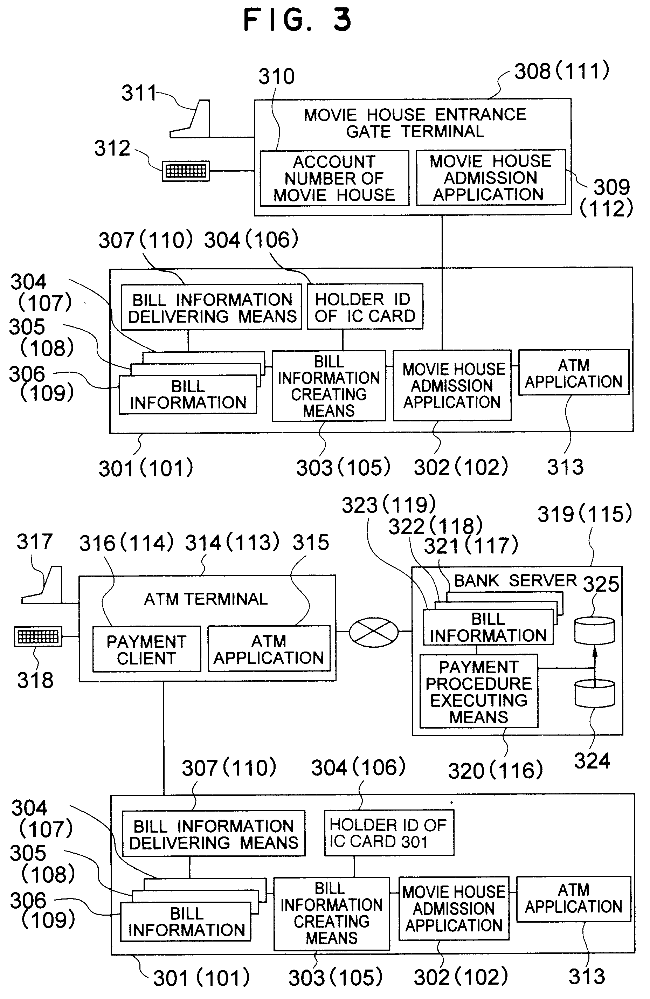

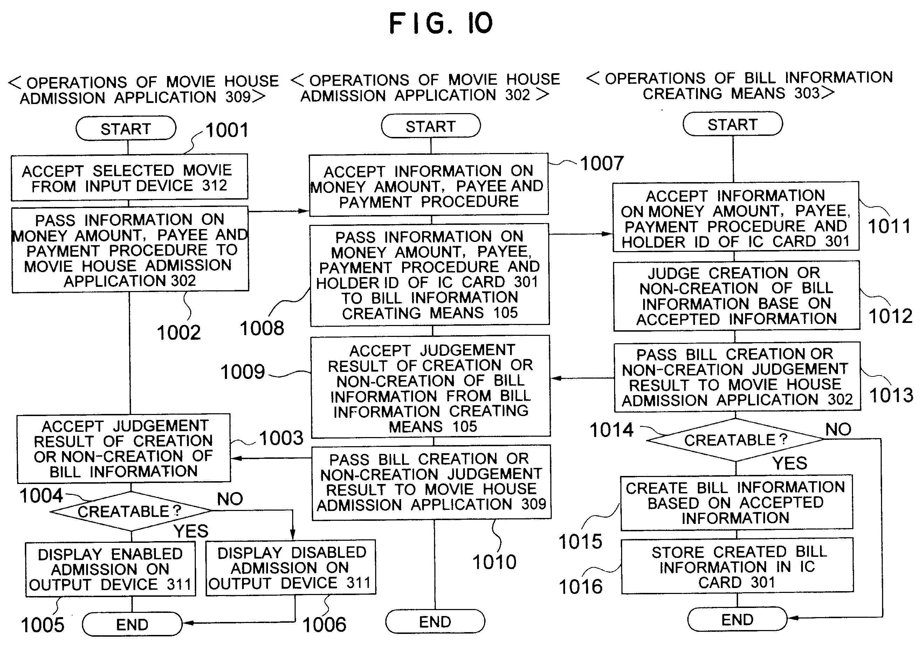

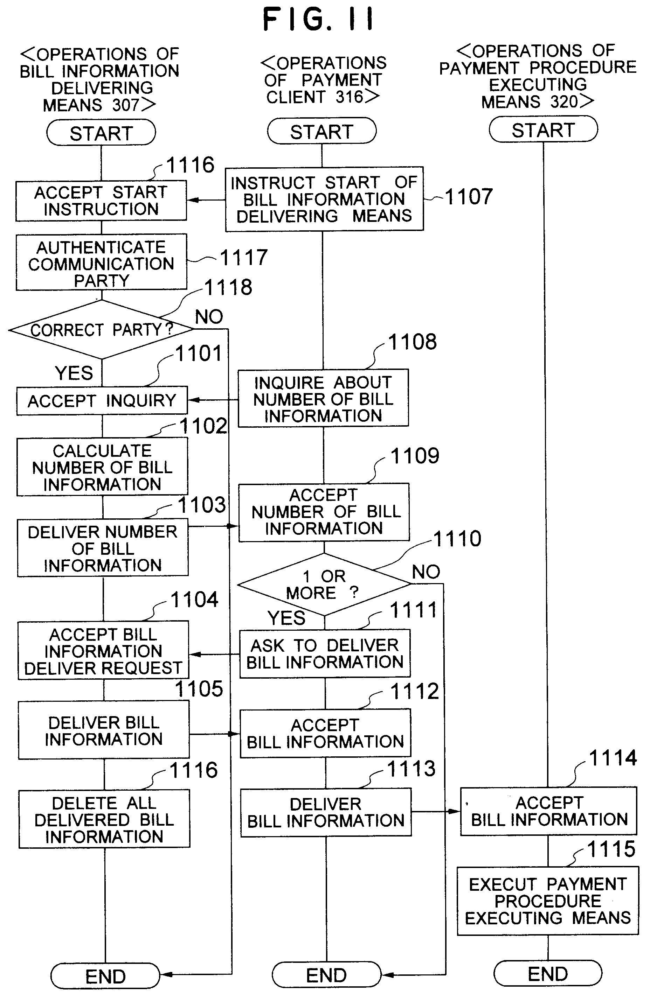

The aforementioned operations will be explained more specifically in connection with Fig. 3 showing flows of operations of the entire fee settlement system in accordance with the present invention as an example and also by referring to Figs. 10 and 11.

Here is an example, first. When an IC card holder wants to go to a movie house to watch a movie, he or she can enter the house by using an IC card 301 by agreement of paying its entrance charge later or on time.

More in detail, when the IC card holder enters the movie house, he or she loads the IC card 301 (to be explained later) into a terminal installed at the entrance of the house. When the terminal issues an admission, the holder is allowed to pay its admission fee later, that is, on time and to enter the house. The operations ranging from the loading of the IC card into the terminal to acquisition of the admission based on the IC card promising to pay the admission fee on time correspond to the pay operation execution phase.

The IC card can be used also as a bank card and thus he or she can withdraw his or her own account money from an automatic teller machine (ATM) terminal. The ATM terminal can be used also as the terminal-side application 113 having the payment client function 114. Later after having watched the movie, the IC card holder uses the ATM terminal to draw some money from his or her own account. At this time, the movie fee to be paid on time is paid in the ATM machine. The operations of such payment based on the IC card correspond to the paying operation phase. This example will be sometimes called the 'movie house problem', hereinafter.

Although the paying operation phase is carried out later after the pay operation execution phase in the 'movie house problem', the present invention is not limited to this example. In other words, it is unnecessary to put a predetermined time between the paying operation phase and pay operation execution phase, and thus, when a terminal-side application capable of offering a pay service is mounted in the terminal-side application 113, the paying operation phase may be carried out immediately after the paying operation phase.

Fig. 3 shows a system embodying the above example. In Fig. 3, corresponding elements when a general system of Fig. 1 is applied to the above example are denoted by numbers on the order of 100 in parentheses following numbers on the order of 300.

Flows of operations in the pay operation execution phase in the present example will first be explained with reference to Fig. 10.

Shown in Fig. 10 is a flowchart for explaining the flows of operations in the paying operation phase of the 'movie house problem'. In a step 1001, first, a movie house admission application 309 (terminal-side application 112) accepts an input of one of movies selected by the holder of the IC card 301 from an input device 312 of a movie house entrance gate terminal 308 (off-line terminal 111).

In a step 1002, the movie house admission application 309 examines the fee (assumed to be ¥1800) of the selected movie, specifies to perform an account transfer of ¥1800 as money amount information to the payee (movie house account and which account number is acquired from an account number 310) from the account of the IC card holder as a payment procedure, and then passes the control to a movie house admission application 302 (card-side application 102). The above operation flow of the present example is different from that of Fig. 6 in that the money amount information and payee information are acquired from the movie house admission application 309, i.e., terminal-side application 113. However, as mentioned above, how to hold information such money amount, payee and payment procedure varies from application mounting to application mounting but essentially the same.

In a step 1007, the movie house admission application 302 accepts the information on the money amount, payee and payment procedure from the movie house admission application 309. In a step 1008, the movie house admission application 302 passes the information about the accepted money amount, payee and payment procedure as well as information about a holder ID 304 of the IC card 301 to a bill information creating means 303. In Figs. 1 and 3, the card information 106 is arranged to be acquired from the bill information creating means 303. However, the card-side application 102 may directly acquires the information and passes it to the bill information creating means 303, or the card-side application 102 may issue an instruction to the bill information creating means 303 to extract the information in such a manner that the bill information creating means 105 acquires the information. In a step 1011, the bill information creating means 303 accepts the information about the money amount, payee, payment procedure and the holder ID of the IC card 301 from the movie house admission application 302.

In a step 1012, the bill information creating means 303 judges on the basis of the accepted information whether to create is bill information. The judgement system is not restricted to the format of the present embodiment and may be arbitrarily employed. The judgement system is assumed in the present example to be arranged so that, when there is not an error (e.g., the money amount having a negative value) in the information on the money amount or payee, the bill information is created, while in the presence of an error, the bill information is not created.

In a step 1013, the bill information creating means 303 the above judgement result to the movie house admission application 302. In a step 1014, the bill information creating means 303, when the judgement result indicates the impossible creation of the bill information, terminates its operation; whereas, when the judgement result indicates the possible creation of the bill information, the means 303 proceeds to a step 1015.

The bill information creating means 303 creates in the step 1015 the bill information on the basis of the holder ID 304 of the IC card 301, and in a step 1016, stores it into the IC card 301. Fig. 2 shows the bill information in the 'movie house problem', including ¥1800 as the money amount information 202, movie house's account as the payee information 203, account transfer as the payment means 204, and the IC card holder ID 205 for identification of holder's account of the IC card 301 as an account transfer originator. In this conjunction, the bill information creating means 303 may include a single step having the steps 1012 to 1015. That is, the bill information creating means 303 may be arranged to create the bill information on the basis of the accepted information.

In a step 1009, the movie house admission application 302 accepts the judgement result of creation or non-creation of the bill information from the bill information creating means 303. In a step 1010, the movie house admission application 302 passes the bill creation judgement result accepted in the step 1009 to the movie house admission application 309, and terminates its operation. In a step 1003, the movie house admission application 309 accepts the bill creation judgement result from the movie house admission application 302.

In a step 1004, the movie house admission application 309 judges whether to create the bill information on the basis of the result accepted in the step 1003. When judging the possible creation of the bill information, the movie house admission application 309 goes to a step 1005. When judging the impossible creation of the bill information, the movie house admission application 309 proceeds to a step 1006. In the step 1005, the movie house admission application 309 displays entrance admission on an output device 311. In this case, the holder of the IC card 301 can watch the selected movie, that is, can enter the movie house. In the step 1006, the movie house admission application 309 displays impossible entrance on the output device 311. In this case, the holder of the IC card 301 cannot watch the movie. The pay operation execution phase in the 'movie house problem' in the present embodiment has been explained in the foregoing, resulting in that bill information 306 is stored in the IC card.

Explanation will then be made as to flows of operations in the paying operation phase in the 'movie house problem' in the present embodiment, by referring to Fig. 11. As already explained above, the ATM application 313 (which can eliminate the need for provision of a communication interface with the bill information creating means 303) is built in the IC card 301. Thus explanation will be started with the start of the paying operation phase, which is incidentally carried out taking an opportunity that the holder of the IC card 301 withdraws his money by from his own account at the ATM terminal.

Further, it is assumed that the bill information 304 and 305 are information which are created down to this time point through the pay operation execution phase in the 'movie house problem' or through the pay operation execution phase in another problem and are so far stored in the IC card 301.

In a step 1107, first of all, the payment client 316 issues an instruction indicative of start of the bill information delivering means and also information for judgement of whether or not the party is correct to a bill information delivering means 307. In a step 1116, the bill information delivering means 307 accepts the start instruction. At this time, the bill information delivering means 307 also accepts the information for the party authentication.

In a step 1117, the bill information delivering means 307 authenticates the communication party with use of a suitable authentication means on the basis of the authentication information accepted in the step 1116. The bill information delivering means 307, when judging in the step 1117 that the communication party is correct, proceeds to a step 1101 to be put in its inquiry acceptance state. When judging that the communication party is incorrect, the bill information delivering means 307 terminates its operation.

In a step 1108, the payment client 316 inquires of the bill information delivering means 307 about the number of pieces of the bill information stored in the IC card 301. In this conjunction, the bill number inquiry is carried out only for judgement of whether the bill number is one or more, and this may be replaced by such inquiry as to "judge whether or not the bill information is stored in the IC card 301".

The bill information delivering means 307 accepts in a step 1101 the inquiry from the payment client 316, and in a step 1101 examines the number of bill information pieces. In a step 1103, the bill information delivering means 307 passes the bill information piece number examined in the step 1102 to the payment client 316. In the present example, the bill information piece number is assumed to be 3.

In a step 1109, the payment client 316 accepts the bill information piece number from the bill information delivering means 307. The payment client 316, when judging in a step 1110 that the bill information piece number is one or more, proceeds to a step 1111. The payment client 316, when judging in the step 1110 that the bill information piece number is zero, terminates its operation. Because the bill information piece number is 3, that is, one or more, the payment client 316 proceeds to the step 1111.

In the step 1111, the payment client 316 issues to the bill information delivering means 307 a request of delivering the bill information therefrom. The bill information delivering means 307 accepts in a step 1104 the request from the payment client 316, and delivers in a step 1105 the bill information so far stored in the IC card 301. Though the bill information to be delivered is not required to correspond to all the information of the IC card 301, all the bill information 304 to 306 are delivered in this example.

In a step 1112, the payment client 316 accepts the bill information 304 to 306 from the bill information delivering means 307. In a step 1113, the payment client 316 delivers the accepted bill information 304 to 306 to a payment procedure executing means 320 within a bank server 319 (payment server 115).

In a step 1114, the payment procedure executing means 320 accepts the bill information 304 to 306.

These information correspond to bill information 321 to 323 in Fig. 3. In a step 1115, the payment procedure executing means 320 performs its payment procedure over the respective accepted bill information 321 to 323, at which stage the means 320 terminates its operation.

Explanation will be made as to the execution of the specific payment procedure over the bill information 323 containing the information in Fig. 2.

As shown by the bill information 323 or 201, the money amount of ¥1800 is transferred from the account of the holder of the IC card 301 to the account of the movie house. The money amount of ¥1800 is shown in the bill information 201 and thus the payment procedure executing means 320 can identify the account of the holder of the IC card 301 by the IC card holder ID 205. The account of the holder of the IC card 301 identified in this manner corresponds to an account 324 in Fig. 3. Further, the account of the movie house is denoted by 203 and corresponds to an account 325 in Fig. 3. The execution of the payment procedure is carried out by transferring ¥1800 from the account 324 to the account 325. The processing operations of the present embodiment have been explained in the foregoing in connection with the 'movie house problem' as an example.

For the purpose of improving service offer or article sale more inexpensively and conveniently, automation and mechanization of the settlement means have been increased. However, provision of the settlement means involves high costs. For example, when a holder having a credit card wants to purchase an article in a store using the card, the store is required to have a credit terminal. Thus the credit company must distributedly install a lot of terminals at many stores in a wide area in order to increase a card utilization frequency. This terminal distribution per se is highly costly. Further, an intermediate company generally called an 'acquirer', which takes the place of the terminal distribution business, is often present between the store and credit company. This means that the credit company must pay a prescribed fee therefor to the acquirer. Furthermore, the installation and management of a network for use of the credit terminal also require a lot of costs. In addition, even the credit terminal of the store is required to be connected to a host computer of the credit company periodically or each time the credit card is used, thus requiring its line connection fee. When the credit terminal is not connected to the host computer through the network having the settlement function, this requires the service provider side to provide such a terminal as to be able to complete the settlement off-line. However, the terminal provided with the settlement function is generally expensive because the terminal must have a high security. For this reason, it becomes difficult to receive pay service from such an inexpensive terminal having a low level of function as a portable terminal.

When the system in accordance with the embodiment of the present invention is used, there can be eliminated the need for a terminal as a pay service provider to have a settlement function and the need for the terminal to be connected to a host computer (payment server in the present embodiment) having the settlement function through the network. Therefore a frequency of terminals connected to the host computer having the settlement function can be minimized. Further, even such a terminal as not to have the network function and settlement function can be used for the pay service offer, and thus the terminal distribution can be inexpensively realized.

In the present embodiment, one bill information creating means and one bill information delivering means are built in the IC card 101. A plurality of each of such means may be provided in the IC card as necessary. However, as in the present embodiment, these means can be provided each one to be shared by the associated pay operation application programs. In this case, there is an advantage that the need for the pay operation application programs to each have an independent settlement function can be removed.

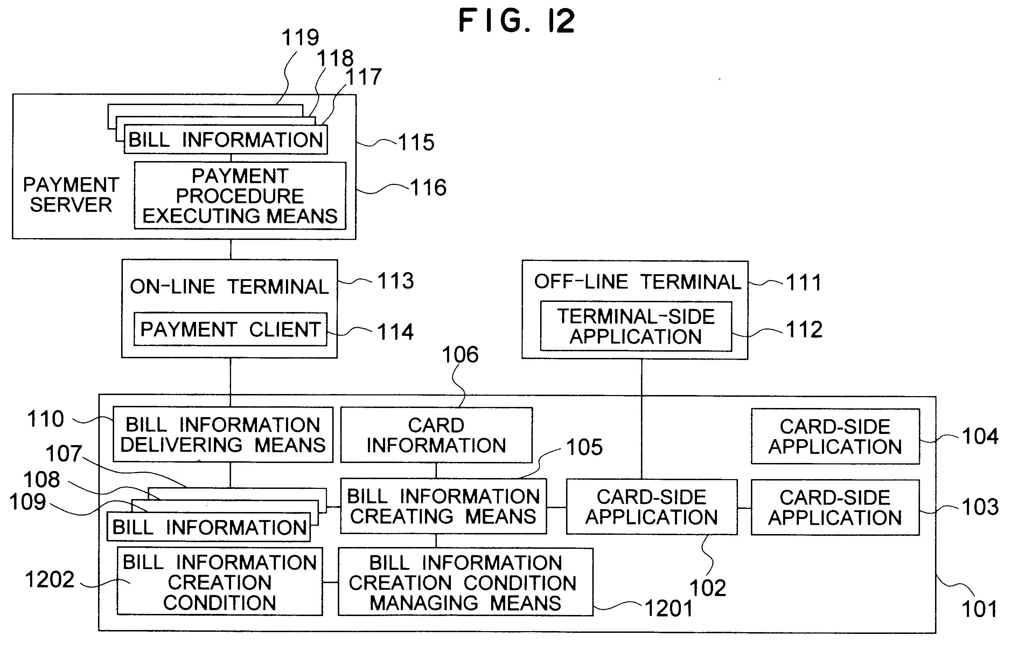

Explanation will then be made as to a second embodiment of the present invention with reference to Figs. 12 to 14.

Fig. 12 is a diagram for explaining a fee settlement system in accordance with the second embodiment, wherein, unlike Fig. 1., the bill-information creation condition managing means 1201 and bill-information creation condition means 1202 are provided in the IC card 101. The bill-information creation condition means 1202 stores therein conditions when the bill information creating means 105 creates bill information. The bill-information creation condition managing means 1201 functions to judge whether or not the bill information creating means 303 can create the bill information on the basis of the conditions of the bill-information creation condition means 1202. The bill-information creation condition means 1202 may include a means which follows. That is, when a predetermined time elapses after creation of past-created bill information and when the system is not connected to the on-line terminal, new bill information is not created. (If the system is connected to the on-line terminal, then new bill information can be created.)

Further, the 'predetermined time' in the above may be replaced by (or combined with) the time when bill information of a predetermined money amount is created. At this time, the predetermined time and predetermined money amount may be changed by users. For example, the predetermined time and money amount can be determined by the balance of user's bank account or the performance of so-far transactions. Furthermore, in addition to inhibition of the creation of the bill information, (1) a warning may be (once) issued, (2) the transaction may be stopped (use inhibition of the IC card, and (3) if negotiable information is included in the IC card, then the use of the negotiable information may be inhibited or may be output.

The start of the predetermined time may use the oldest bill information within the IC card as its start reference. Or whether or not a period duration of non-connection to the on-line terminal exceeds a predetermined time as the start reference.

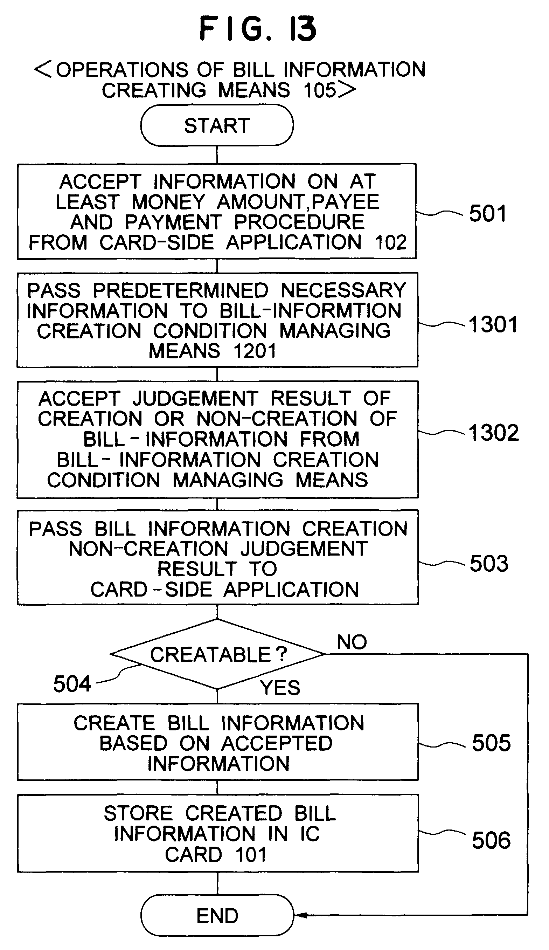

In the second embodiment, the step 502 of the bill information creating means in Fig. 5 in the first embodiment is replaced by steps 1301 and 1302 in Fig. 13.

In a step 1301, the bill information creating means 105 passes predetermined information necessary for the bill-information creation condition managing means 1201 to judge creation or non-creation of the bill information, to the bill-information creation condition managing means 1201. In a step 1302, the bill information creating means 105 accepts a bill creation judgement result from the bill-information creation condition managing means 1201.

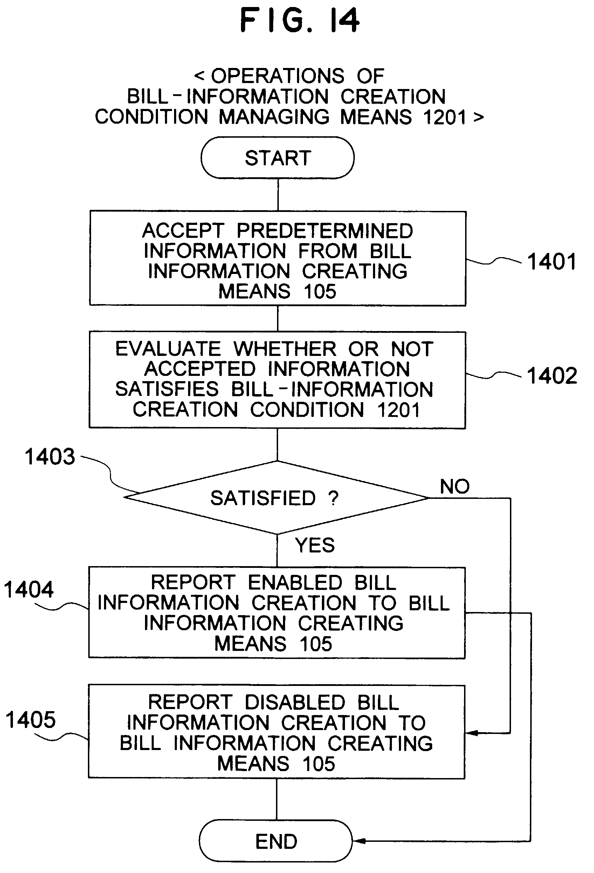

Fig. 14 is a flowchart for explaining a flow of operations in the bill-information creation condition managing means 1201.

In a step 1401, the bill-information creation condition managing means 1201 accepts information necessary for evaluation of a step 1402 from the bill information creating means 105.

In the step 1402, the bill-information creation condition managing means 1202 evaluates or judges whether or not the accepted information satisfies the bill-information creation condition 1202. If necessary, the authentication of the card-side application shown in the step 502 is built in the bill-information creation condition 1202. At this time, the information to be accepted in the step 1401 must contain information necessary for the authentication.

In a step 1403, when judging on the basis of an evaluation result in the step 1402 that the accepted information satisfies the conditions, the bill-information creation condition managing means 1201 proceeds to a step 1404. Otherwise, the bill-information creation condition managing means 1201 proceeds to a step 1405. In the step 1404, the bill-information creation condition managing means 1201 reports the possible creation of the bill information to the bill information creating means 105, and thereafter terminates its operation.

In the step 1405, the bill-information creation condition managing means 1201 reports the impossible creation of the bill information to the bill information creating means 105, and terminates its operation. The operations of Figs. 13 and 14 will be explained more in detail in connection with the bill-information creation condition 1202 as an example.

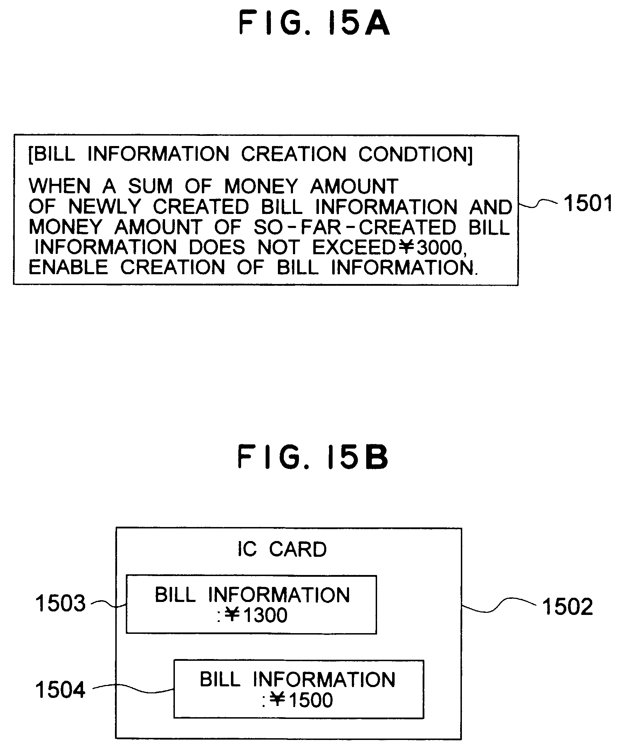

A condition 1501 in Fig. 15A is a specific example of the bill-information creation condition 1202, that is, "the creation of the bill information is enabled when a sum of money amounts of the bill information so far created does not exceed ¥3000". And such a time point is assumed that the bill information 1503 and 1504 are already stored in an IC card 1502 show in Fig. 15B. The bill information 1503 and 1504 have money amounts of ¥1300 and ¥1500 respectively.

At this time, the card holder wants to enter the movie house in the 'movie house problem' of the first embodiment to watch a movie. Since the admission fee is ¥1800, the money amount of ¥1800 in bill information to be newly created, when added to a total sum ¥2800 (¥1300 + ¥1500) of the bill information so far created, exceeds ¥3000. Accordingly, in this case, the bill information creating condition 1501 is not satisfied. Thus the bill-information creation condition managing means 1201 reports in the step 1405 the impossible creation of the bill information to the bill information creating means 105. As a result, the holder of the IC card is not allowed to enter the movie house.

In the bill information creating condition 1501, further, only the money amount of bill information newly created is used for the evaluation. For this reason, the information passed in the step 1301 to the bill-information creation condition managing means 1201 by the bill information creating means 105 may be only the money amount, and the data accepted in the step 1401 by the bill-information creation condition managing means 1201 may be only the money amount.

The bill-information creation condition 1202 may be set to be different from the bill information creating condition 1501, and the information to be passed in the step 1301 to the bill-information creation condition managing means 1201 by the bill information creating means 105 may be changed. When the bill-information creation condition managing means 1201 is provided as in the present embodiment, it can be prevented that the IC card holder endlessly execute the pay operation.

A third embodiment of the present invention will next be explained.

In the third embodiment, the condition specified by the bill-information creation condition managing means 1201 in the second embodiment is not satisfied, use of a specific card-side application or the card itself is limited.

More specifically, in the flow of operations of Fig. 14, when the condition is not satisfied in the step 1403, not only the bill-information creation condition managing means 1201 informs in the step 1404 the bill information creating means 105 of the impossible creation of the bill information, but the means 1201 also limits the use of a specific card-side application or card itself. This use limitation can be freely set. However, in the case where 'the bill-information creation condition managing means 1201 disables the use of the card-side application of a party from which the bill-information creation condition managing means 1201 accepted the information in the step 501' as an example, the use of the movie house admission application 302 becomes impossible in the second embodiment.

Further, the use limitation can be such that "all the functions of the IC card 101 and the functions of all the card-side applications cannot be used except for functions relating to the paying operation phase in Fig. 11". In this case, when the holder of the IC card 101 wishes to use the IC card 101, the paying operation phase of Fig. 11 must be carried out to perform the paying operation.

When the condition specified by the bill-information creation condition managing means 1201 is not satisfied as in the present embodiment, the use of a specific card-side application or card itself can be restricted. Further, not only the use limitation but also warning or transaction stop may be made as necessary.

This can prevent the holder of the IC card 101 from executing the pay operation endlessly. In addition, in order to increase a use frequency of the IC card 101, such setting in the card can be realized as to require the bill information to be delivered to the payment server 115. This means that payment of the holder of the IC card 101 is promoted and thus the corresponding fee collection by the payee of the pay card-side/terminal-side application can be promoted. Further, by changing the bill-information creation condition 1202 for different cards, a condition specific for the holder of the IC card 101can be set, privileges can be granted to a specific card holder, or card limitations can be placed.

Explanation will next be made as to a fourth embodiment of the present invention.

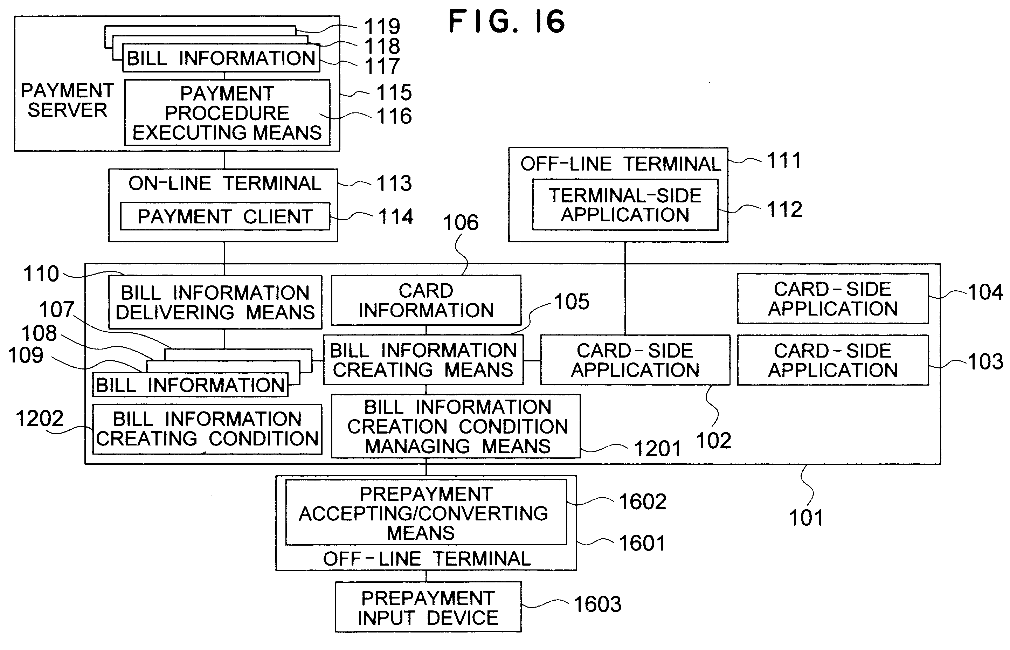

Fig. 16 shows an arrangement of a fee settlement system in accordance with the fourth embodiment, which corresponds to the system arrangement of Fig. 12 but a prepayment accepting/converting means 1602 on an off-line terminal 1601 and a prepayment input device 1603 as a device for inputting a prepayment are newly added.

In the present embodiment, when the system accepts a prepayment in advance, the system creates a condition corresponding to the money amount of the prepayment accepted through a prescribed conversion system, and sets the condition in the bill-information creation condition 1202 within the IC card 101.

The prepayment accepting/converting means 1602 functions to convert the money amount inputted from the prepayment input device 1603 to a suitable condition and to pass the converted condition to the IC card 101. The converting manner may employ any manner so long as it conforms to the transaction condition. To this end, for example, when the bill-information creation condition 1202 is set in the form of a money amount as in Figs. 15A and 15B in the second embodiment, the system can use such a conversion system that adds a previously-set premium (e.g., 10%) to the money amount inputted from the prepayment input device 1603 or subtracts a fee therefrom to calculate a money amount. It is also possible to employ such a conversion system that sets the same money amount as inputted from the prepayment input device 1603.

Further, it is also possible to set a condition other than the money amount such as an expiration date for creation of bill information in the bill-information creation condition 1202. In this case, a suitable conversion system may be employed according to the character of the bill-information creation condition 1202 that, for example, an expiration date is prolonged according to a money amount inputted from the prepayment input device 1603.

Information about the condition on which the prepayment inputted from the prepayment input device 1603 is converted based on the above conversion system is transferred from the prepayment accepting/converting means 1602 to the bill-information creation condition managing means 1201, which in turn sets it in the bill-information creation condition 1202.

The setting manner may also be set properly according to the character of the bill-information creation condition 1202. For example, when the bill-information creation condition 1202 is set in the form of an money amount as in Figs. 15A and 15B in the second embodiment, the setting can be realized by adding the money amount included in the bill-information creation condition 1202 to a money amount after conversion of the money amount inputted from the prepayment input device 1603.

The prepayment inputted from the prepayment input device 1603 is transferred to such a place as usable in the paying operation of another payment server to be used in the payment in the paying operation phase. In this connection, the 'such a place as usable in the paying operation of another payment server' refers, for example, to an account managed by the bank when the payment server is a computer within the bank. This is because the money of this account can be operated by bank's instruction and can be used for the paying operation.

In the present embodiment, in addition to the effects obtained by the second embodiment, the bill-information creation condition 1202 can be changed and therefore an identical card can be used under various sorts of the bill-information creation conditions 1202.

When the bill-information creation condition 1202 is set in the form of a money amount as the example of Figs. 15A and 15B, further, the IC card can be used as a prepaid card.

Furthermore, the present embodiment has effects which follow, unlike the conventional prepaid card. That is, in the present embodiment, a prepaid amount corresponding to a money amount paid in advance is collectively managed and can be used by each card-side application as necessary. In the conventional prepaid system, the card-side application within each IC card has had to request a prepayment for its own application to manage the prepayment amount. For this reason, the holder of the IC card has had to troublesomely conduct prepayment for each card-side application.

Further, when the card holder wants to use a card-side application which is difficult to estimate a use money amount in advance (as when a use frequency is very low and thus when the paying operation is carried out with an amount smaller than a money amount paid in advance), there is a possibility that the IC card holder cannot use up the prepayment already paid wastefully. In such waste-involving operation, it is considered for the IC card user to hesitate to execute the pay operation, which leads to reduction in the opportunity that a pay operation provider can get a benefit.

In the present embodiment, however, even when the pay operation is less frequently used, it can eliminate the need for prepayment of a prepaid amount exclusive to the pay operation for each card-side application, and bill information can be created when necessary by a necessary amount. Further, the IC card holder is only required to save prepayment in a common storage place of the bill-information creation condition managing means 1201 and can eliminate a labor of troublesomely conduct a prepayment for each pay operation.

Explanation will then be made as to a fifth embodiment of the present invention.

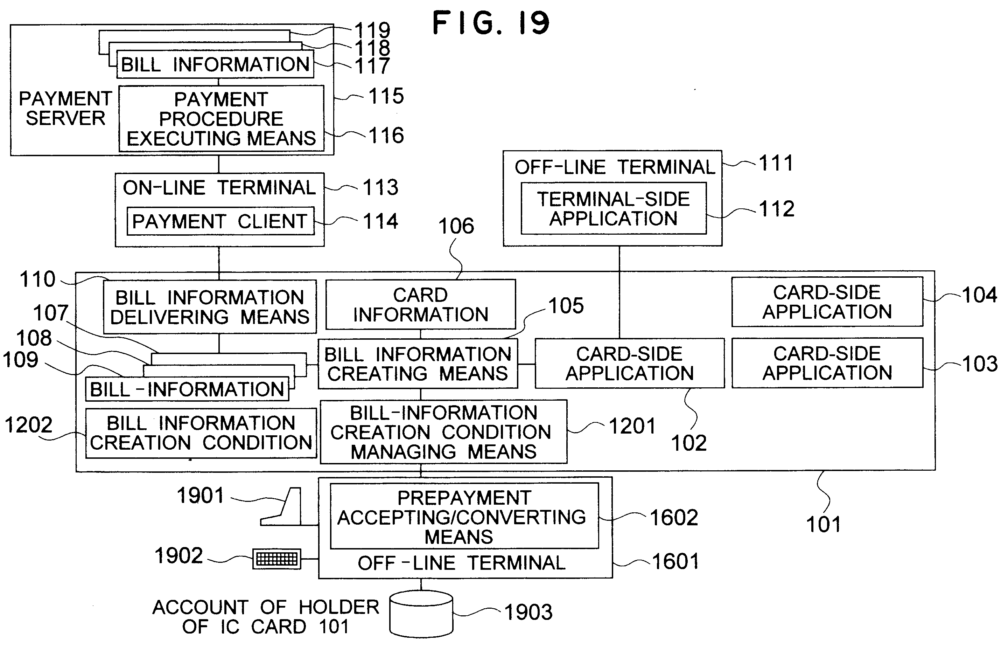

Fig. 19 shows a fifth embodiment of the present invention. The arrangement of Fig. 19 corresponds to that of Fig. 16 but an output device 1901 and an input device 1902 connected to the off-line terminal 1601 are added to acquire information about an account 1903 of the holder of the IC card 101 through a network.

Although the prepayment has been required to be paid from the prepayment input device 1603 in the fourth embodiment, when such an arrangement as shown in Fig. 19 is employed, it become possible to complete the prepayment from the account 1903 of the holder of the IC card 101 through the network.

The output and input devices 1901 and 1902 are provided to display and input information on how much money is passed to the prepayment accepting/converting means 1602 from the money stored in the account 1903 of the holder of the IC card 101. The money amount eventually determined through the output and input devices 1901 and 1902 is treated in the similar manner to the information about the money inputted from the prepayment input device 1603 in the fourth embodiment. The money amount is shifted from the account 1903 of the holder of the IC card 101 to a place where the payment server can use it in the payment.

Further, with a similar arrangement to the above, the account 1903 may be of a credit company. In this case, for the prepayment, the payee inquires of the credit company 1903 about the prepayment, and a money amount which the holder of the IC card 101 can borrow on his credit based on the IC card 101 is acquired from the account 1903. The output and input devices 1901 and 1902 are provided to display and input information on how much money is passed to the prepayment accepting/converting means 1602 from a money amount allowed from the credit company. The money amount eventually determined through the input device 1902 is treated in the similar manner to the information about the money inputted from the prepayment input device 1603 in the fourth embodiment. The money amount is shifted from the credit company 1903 to a place where the payment server can use it in the payment. In this connection, the repayment of the money which the holder of the IC card 101 borrowed from the credit company can be carried out in a similar system to ordinary credit business.

When the present embodiment is employed, there can be eliminate the need for the card holder to carry cash and load it into the prepayment input device 1603 for the payment of the prepayment to set the bill-information creation condition 1202.

Explanation will next be made as to a sixth embodiment of the present invention.

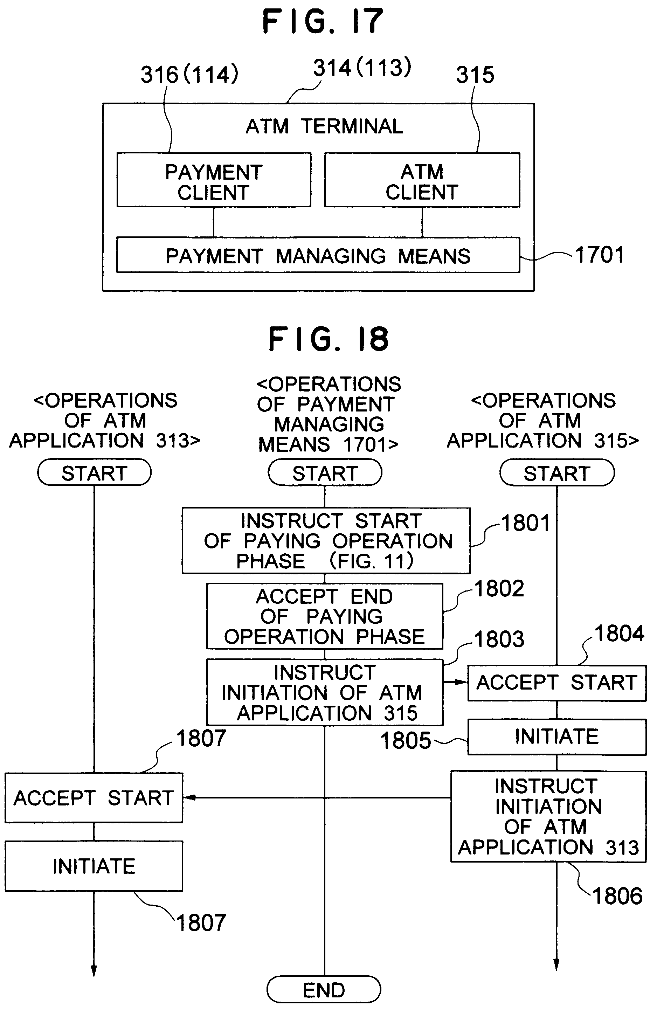

In the present embodiment, the on-line terminal 113 is equipped with a payment managing means which has a function of controlling the execution of the payment client 114 or other application built in the terminal 113. Fig. 17 shows a payment managing means 1701 built in an ATM terminal 314 as an on-line terminal shown in connection with the 'movie house problem' in the first embodiment. As shown in Fig. 18, the means 1701 controls the execution of the payment client 316 and ATM application 315.

A flow of this control will be explained below by referring to Fig. 18.

In a step 1801, first, the payment managing means 1701 issues an instruction indicative of start of the paying operation phase shown in Fig. 11. More specifically, the paying operation phase of Fig. 11 is started when the payment managing means 1701 issues an instruction to the payment client 316 to start the step 1107.

In a next step 1802, the payment managing means 1701 accepts the end of the paying operation phase. Though the end reporting operation is not included in the operations of Fig. 11, such operation as to report the end of the paying operation phase to the payment managing means 1701 is only required to be added immediately after the end of the operation of the payment client 316. In a step 1803, next, the payment managing means 1701 starts the ATM operation which the holder of the IC card 101 wants to do. In other words, the payment managing means 1701 issues an instruction to start the ATM application 315.

The ATM application 315 accepts the start in a step 1804 and starts it in a step 1805. In a step 1806, the ATM application 315 issues an instruction to the ATM application 313 to start it. The ATM application 313 accepts the start instruction in a step 1807 and starts in a step 1808. The ATM applications 313 and 315 can perform suitable operations determined as the ATM operations after the steps 1808 and 1806 respectively, but their detailed operations are omitted herein.

In this example, as shown in Fig. 18, the payment managing means 1701 first instructs the operations of the paying operation phase and after completion of the operations, controls to cause another application on an on-line terminal to be executed.

In the first embodiment, the holder of the IC card 301 utilizes the ATM terminal 314 to execute the ATM function to draw the necessary money from his account, simultaneously performing the operations of the paying operation phase and paying the payment such as movie admission fee. As shown in the embodiment, the payment to the payee of the pay operation can be necessarily automatically carried out regardless of the will or intention of the IC card holder by the control of starting the paying operation phase. Although the operation of the paying operation phase has been first carried out in the example of Fig. 18 (step 1801), the similar effect can be obtained by performing this after execution of the ATM application. The execution of the operation of the paying operation phase may be left to the selection of the IC card 101 and the payment managing means 1701 may be executed at any time point. Even in this case, the effect of reminding the holder of the IC card 101 of the payment can be obtained by the payment managing means 1701.

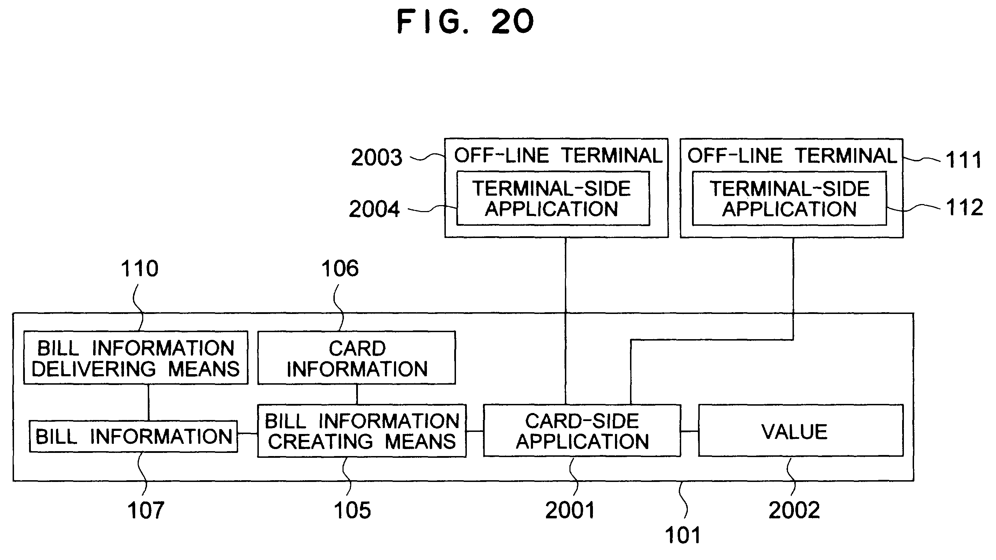

Explanation will next be made as to a seventh embodiment with reference to Fig. 20.

Fig. 20 corresponds to Fig. 1 but the elements including the on-line terminal 113 and payment server 115 which are not directly explained are omitted in Fig. 20. However, this does not means that the terminal-side application 113 and payment server 115 are unnecessary. Shown as newly provided in Fig. 20 are an off-line terminal 2003 and a terminal-side application 2004 within the off-line terminal 2003.

A card-side application 2001, when becoming cooperative with the terminal-side application 2004, generates a special-purpose value 2002 exclusive to the card-side application 2001. The word 'value' as used herein means electronic information having a value equivalent to cash. The special-purpose value 2002 means such electronic information that can have a value equivalent to cash in a specific application but cannot be used in applications other than the specific application. Generation of the special-purpose value 2002 corresponds to the pay operation. For generating the special-purpose value 2002, bill information is created as in the first embodiment. A phase for generation of the special-purpose value in such a manner as mentioned above will be referred to as the special-purpose value purchase phase, hereinafter.

The card-side application 2001 pays the special-purpose value 2002 to the card-side application 2001 and executes the operation cooperative with the terminal-side application 112 of the off-line terminal 111. A phase for execution of the operation using the special-purpose value in such a manner as mentioned above will be referred to as the special-purpose value use phase, hereinafter. In the present embodiment, as mentioned above, when the pay operation is once carried out, the special-purpose value 2002 is generated and another operation is carried out using the special-purpose value 2002. For the purpose of explaining the above in more detail, explanation will be made in connection with an example of realizing a system when a person buys a ticket to get on a train.

First, the special-purpose value purchase phase will be explained.

The card-side application 2001 also advances an operation similar to the operation of the card-side application 102 in Fig. 4, the card-side application 102 in Fig. 4 corresponding to the card-side application 2001. In the operation of the step 405 when the bill information can be created in Fig. 4, the card-side application 2001 creates an electronic ticket corresponding to the money amount (or as added by such a value as a predetermined premium) specified in the step 401. This electronic ticket is the special-purpose value 2002. Each time the special-purpose value 2002 is created in this manner, its money amount is added. The special-purpose value 2002 can be exclusively used only as the electronic ticket. In this connection, the operation of the step 406 when the bill information cannot be created is not carried out specially.

Explanation will next be made as to the special-purpose value use phase.

The off-line terminal 111 indicates a terminal at an automated ticket gate for presentation of a ticket before the person gets on the train. The holder of the IC card 101, before getting on the train, loads his IC card 101 into the terminal 111. This causes the terminal-side application 112 of the off-line terminal 111 to subtract the value equivalent to a train section ride from the special-purpose value 2002 of the IC card 101 in cooperation with the card-side application 2001 to admit holder's passage through the gate. At this time, if the special-purpose value 2002 is short of the money amount corresponding to the train section ride, then the card holder cannot pass through the gate. Further, when the holder gets on the trains, there are considered several systems of passing through automatic ticket gates as when the holder passes through entrance and exit gates, thereby passing through the automated ticket gate twice. In the twice passage case, however, there is considered such a system that a starting fare is subtracted from the special-purpose value 2002 at the entrance gate and a difference between the starting fare and a money amount corresponding to the train section ride is subtracted from the special-purpose value 2002 at the exit gate. For train section rides of constant train fare, the fare may be subtracted from the special-purpose value 2002 once. These methods may be changed according to the fare system of particular train ride sections.

In the explanation of use of the above electronic ticket, the special-purpose value 2002 is first created in the special-purpose value purchase phase and then the phase is shifted to the special-purpose value use phase where the special-purpose value can be used up to the money amount of the special-purpose value 2002.

Further, the above procedure may also be reversed in the following manner.

In the special-purpose value use phase, first of all, the card holder loads his IC card 101 into the automatic ticket gate 111 and passes through the gate. At this time, a fare necessary for the passage is stored in the special-purpose value 2002 as a minus special-purpose value. In the special-purpose value purchase phase, next, the terminal-side application 2004 and card-side application 2001 communicate with each other to create bill information on the money amount corresponding to the minus value of the special-purpose value 2002. And the value of the special-purpose value 2002 can be set at zero. (a value above zero may be stored to use the special-purpose value in the special-purpose value use phase, as a matter of course.)

In the paying operation phase of the bill information stored in the IC card may be carried in a similar manner to either one of the above systems in the foregoing embodiment. In the present embodiment, such a simple terminal (e.g., 111 in Fig. 20) as a portable terminal is used to generate a special-purpose value having its use limitation within the IC card 101. In order to get security, in general, a special-purpose value having a versatility sometimes requires time-consuming operation such as encryption. In this connection, when its application is limited, the security level (the complexity of the necessary encryption) can be lowered.

In the case of the use of the present embodiment, when it is desired to terminate operation in a short time as in the passage of the automatic ticket gate, this can be realized by using a simple terminal in advance. Further, when the card holder generates a special-purpose value on the portable terminal before passing through the gate, a special-use prepaid card can be created so long as it is reliably used. Thus similarly to the effect of the fourth embodiment, the leaving of such a special-use special value as expected not to be used in the IC card 101 can be eliminated.

Further, when the special-purpose value use phase and special-purpose value purchase phase are reversed, a constant special-purpose value is used and then a money amount corresponding to the special-purpose value is cleared. Even in this case, the similar effect to the above can be obtained.

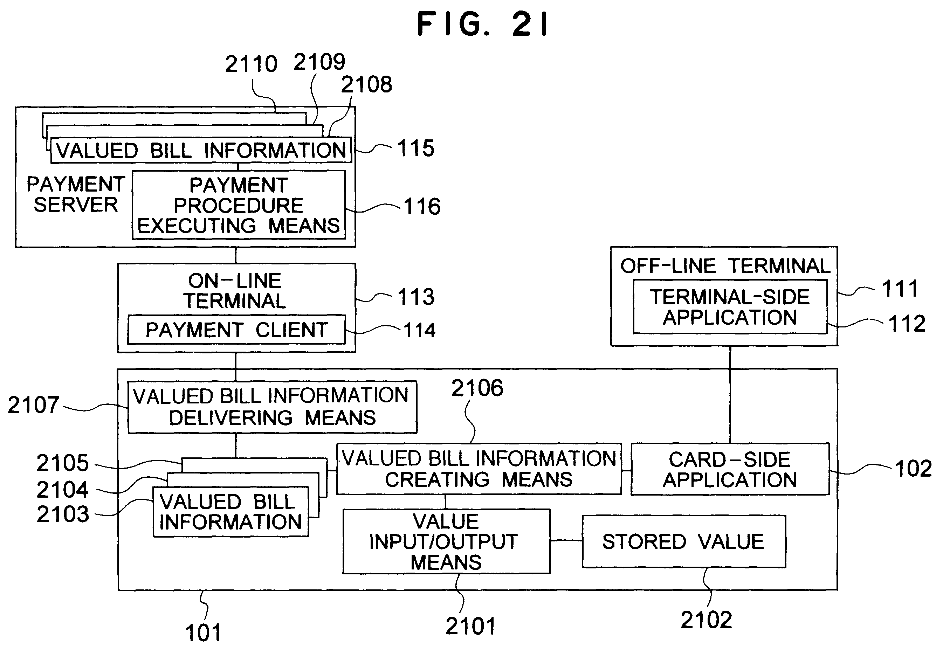

An eighth embodiment of the present invention will next be explained with reference to Fig. 21.

Fig. 21 is a diagram for explaining a fee settlement system in accordance with the eighth embodiment, in which a value input/output means 2101 is provided for adding a value to a stored value 2102 or extracting it therefrom. The word 'value' as used herein means, as in the seventh embodiment, electronic information having a value similar to cash and having at least money amount information. The stored value 2102 refers to the value stored in the IC card 101 through the value input/output means 2101. A combination of the value input/output means 2101 and stored value 2102 can function as an electronic money application.

Valued bill information 2103 o 2105 correspond to bill information including an addition of a value corresponding to the money amount as the money amount information of the bill information in the first to seventh embodiments.

In this connection, if unnecessary, then the money amount in the bill information may be omitted and the value may be used instead.

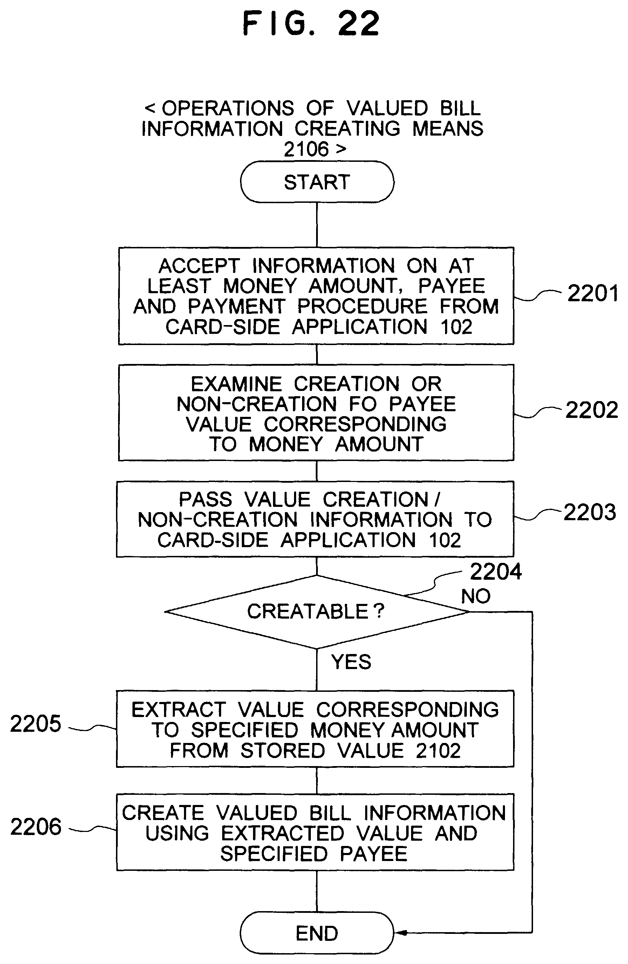

Further, the bill information creating means 105 in the first embodiment is replaced by the payee value creating means 2106. In place of the operation (of the step 505 in Figs. 5 an 13) of acquiring information on the money amount, payee, etc. to create the bill information, the payee value creating means 2106 extracts the same amount value from the stored value 2102 and creates bill information (such as 2103) including information about this value and its specified payee. In this connection, in the creation of the valued bill information, such operations are necessary as to examine whether or not the stored value 2102 includes a value corresponding to the specified money amount and to create the valued bill information only when the stored value 2102 includes the specified money amount value. The operations of the payee value creating means 2106, which are shown in Fig. 22, will be later explained.

Further, a payee value delivering means 2107 is used in place of the bill information delivering means 110. In this case, however, the payee value is treated in place of the bill information. Similarly, the payment client 114 is also different from that in the first embodiment in that the payee value is treated in place of the bill information, and other operations are the same as in the first embodiment.

The operations of the card-side application 102 and terminal-side application 112 are the same as those in the first embodiment. However, the card-side application 102 performs information transfer not with the bill information creating means 105 but with the payee value creating means 2106.

Valued bill information 2108 to 2110 indicate a state in which the valued bill information 2103 to 2105 within the IC card 101 were delivered to the payment server 115 through the payment client 114, and the payment procedure executing means 116 completes the payment with use of the valued bill information 2108 to 2110. The operation of the payee value creating means 2106 will now be explained by referring to Fig. 22.

In a step 2201, the payee value creating means 2106 accepts the money amount of the pay operation as well as information about the payee of the money amount and payment means from the card-side application 102. In a step 2202, the payee value creating means 2106 judges whether or not the stored value 2102 is not lower than the money amount information accepted in the step 2201. When the stored value 2102 is not lower than the money amount information accepted in the step 2201, the payee value creating means 2106 judges the possible creation of the valued bill information, and otherwise the means 2106 judges the impossible creation. In a step 2203, the payee value creating means 2106 passes the judgement result (indicative of the possible or impossible creation of the valued bill information) of the step 2202 to the card-side application 102. In a step 2204, the payee value creating means 2106 proceeds to a step 2205 when the judgement result of the step 2203 is the possible creation; while the means 2106 terminates its operation when the result is the impossible creation.

In the step 2205, the payee value creating means 2106 extracts a value corresponding to the specified money amount from the stored value 2102 through the value input/ output means 2101. In a step 2206, the payee value creating means 2106 creates valued bill information using the value extracted in the step 2205 and the specified payee, and then stores it in the IC card 101. And the payee value creating means 2106 terminates its operation. The valued bill information 2103 to 2105 are valued bill information created in this way.

The payment procedure executing means 116 completes the payment with use of the valued bill information 2108 to 2110 received from the IC card 101 through the payment client 114. At this time, when such an account as to be able to accept the value as the payee is specified, the value contained in the valued bill information can be sent to the account; whereas, when such an account as not to be able to accept the value is specified, the value can be converted to a value such as cash that is able to be accepted by the payee to complete the payment. When the payment procedure has such variations, the value can be specified to the payment procedure information contained in the valued bill information.

In the present embodiment, the holder of the IC card 101 (represented by a combination of the value input/ output means 2101 and stored value 2102) is only required to use an ordinary electronic money application, and can complete the payment of the pay operation using he card-side application with use of the value of the electronic money application.

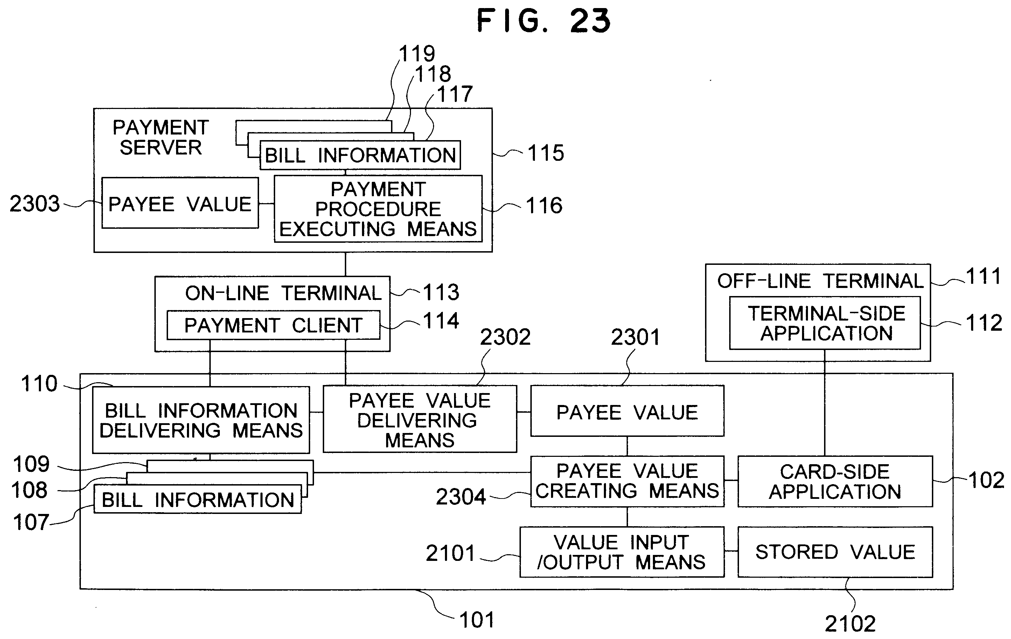

Next a ninth embodiment of the present invention will be explained with reference to Fig. 23.

Fig. 23 is a diagram for explaining a fee settlement system in accordance with the ninth embodiment.

In the eighth embodiment, the settlement has been made with use of the valued bill information 2103 to 2105. In other words, management has been made in such a manner that the value corresponding to the money amount to be delivered is associated with each bill information. In the present embodiment, bill information has the same format as that in the first embodiment, and when a total of the money amount information contained in all the bill information within the IC card 101 is secured as a payment value, the total money amount is collectively managed as a payee value 2301.

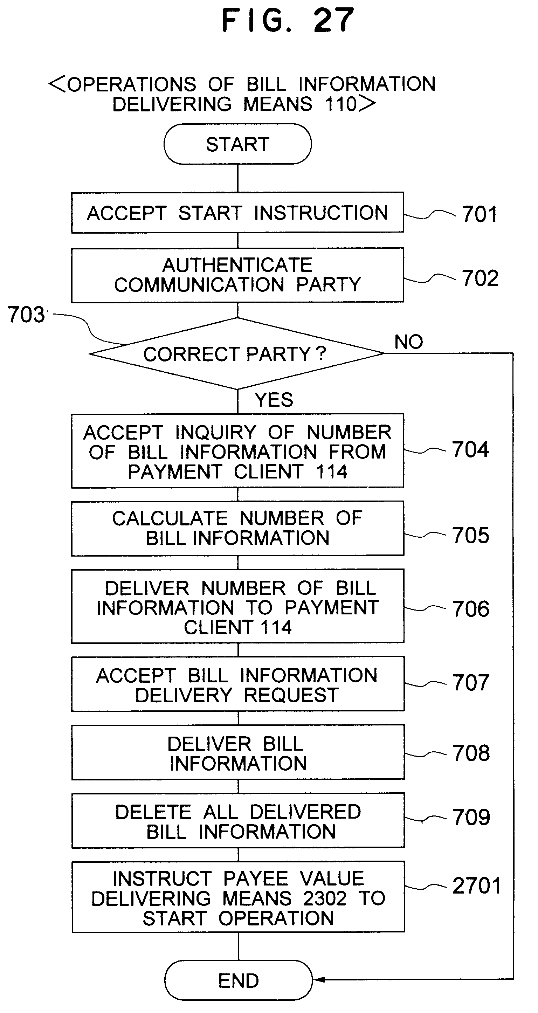

Further, in place of the payee value delivering means 2107, the bill information delivering means 110 and payee value delivering means 2302 are used. In this example, the operation of the bill information delivering means 110 is carried out in the following manner after the step 709 in the operation of the bill information delivering means 110 in Fig. 7. That is, as shown in Fig. 27, in a step 2701, the bill information delivering means 110 issues an instruction to the payee value delivering means 2302 to start the operation of the means 2302.

The operation of the payee value delivering means 2302 is the same as that of the bill information delivering means 110 in Fig. 7, except that information to be treated is not bill information but payee value.

At this time, the payee value delivering means 2302 accepts in a step 701 the start instruction from the payee value delivering means 2302 and authenticates in a step 702 the payee value delivering means 2302. However, when it is previously known that the bill information delivering means 110 is a reliable party (for example, when the bill information delivering means 110 and payee value delivering means 2302 are provided in the form of an identical program), the authentication in the step 702 becomes unnecessary, as a matter of course.

In the processing flow explained herein, a starter of the start of delivering the payee value is the bill information delivering means 110. However, the starter of the start of delivering the payee value from the payment procedure executing means 116 (through the payment client 114) to the payee value delivering means 2302 may be prepared as soon as the payment procedure executing means 116 terminates the delivering operation of the bill information delivering means 110. The operation of the terminal-side application 112 is the same as that in the previous embodiment. The operation of the card-side application 102 is also the same as that in the previous embodiment. However, the card-side application 102 perform information transfer not with the bill information creating means 105 but with the payee value creating means 2304.

A payee value 2303 indicates a state where the payee value 2301 within the IC card 101 was delivered to the payment server 115 through the payment client 114, and the payment procedure executing means 116 completes the payment with use of the bill information 117 to 119 and payee value 2303.

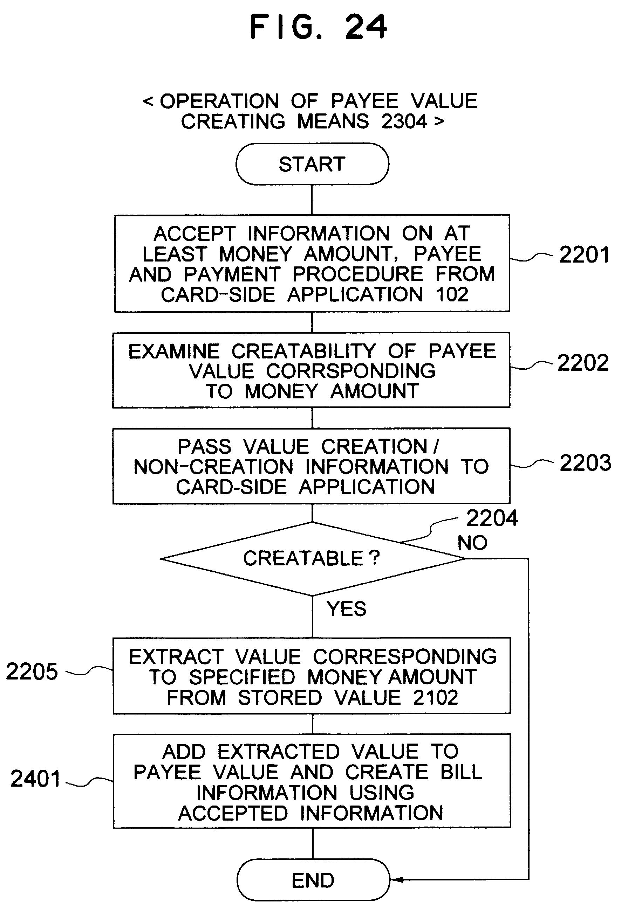

The operation of the payee value creating means 2304 will now be explained with reference to Fig. 24.

Operation of the payee value creating means 2304 is the same as that of Fig. 22 except for a step 2401 alone. That is, in the step 2401, the value extracted in the step 2205 is added to the payee value 2301. And the payee value creating means 2304 creates bill information using the information accepted in the step 2201. The payment procedure executing means 116 completes the payment with use of the payee value 2303 delivered from the IC card 101 through the payment client 114 and the bill information 117 to 119.

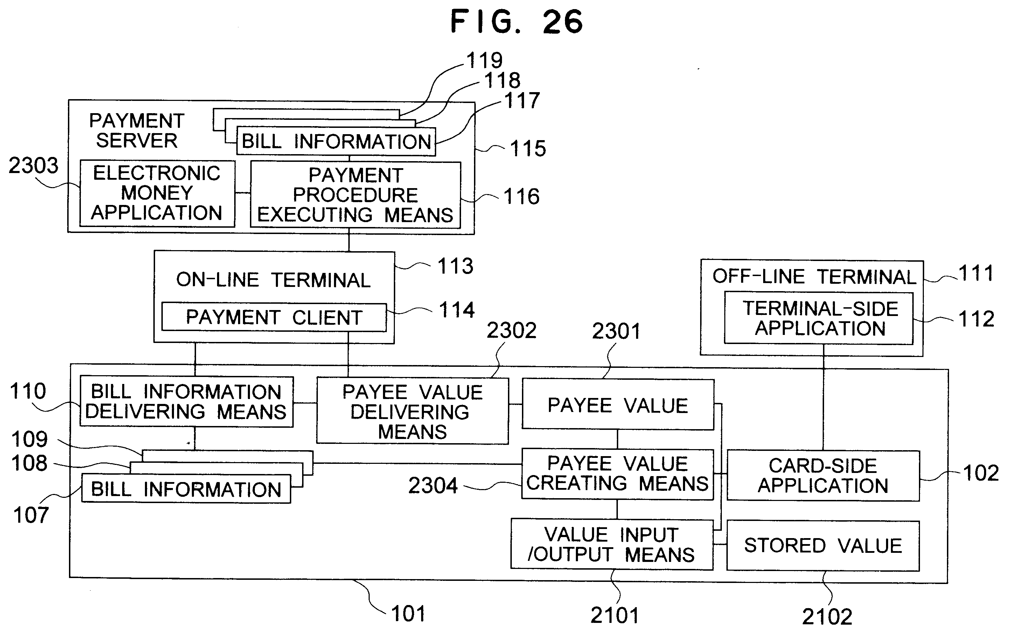

In the steps 2205 and 2401 of Fig. 24, the stored value 2102 is moved to the payee value 2301 through the payee value creating means 2106. However, such an arrangement as shown in Fig. 26 can be employed so that, in place of the step 2205, "an instruction is issued to the value input/output means 2101 to transfer the value corresponding to the specified money amount from the stored value 2102 to the payee value 2301", and that, in place of the step 2401, "the bill information is created with use of the information accepted in the step 2201". Further, in Fig. 26, the payee value creating means 2304 is shown to issue the instruction to the value input/output means 2101. However, the payee value creating means 2304 may issue the instruction to the payee value creating means 2304 to extract a value corresponding to the specified money amount from the value input/output means 2101.

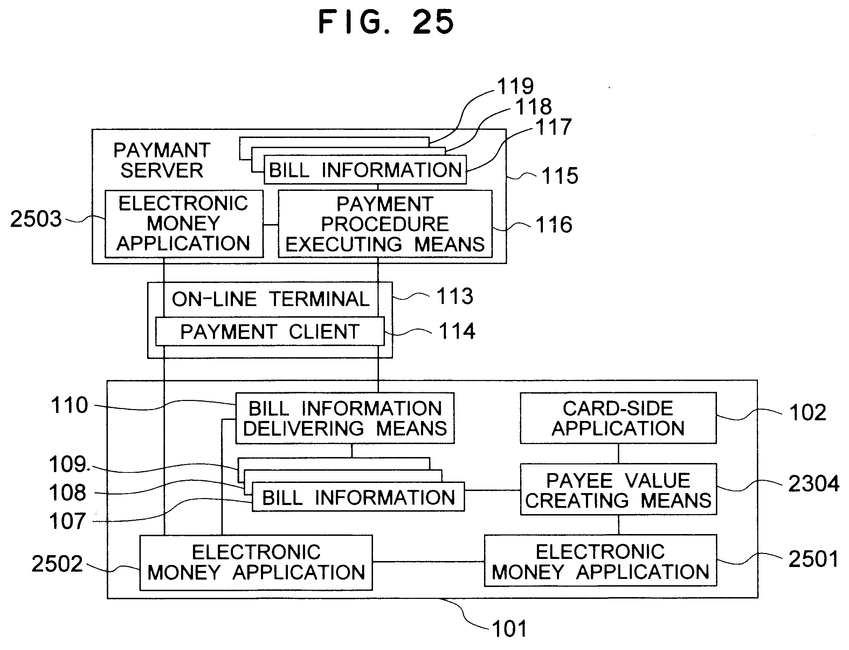

In accordance with the present embodiment, such a system as shown in Fig. 25 may be arranged.

An electronic money application 2501 contains the value input/output means 2101 and stored value 2102 in Fig. 26. That is, the electronic money application 2501 has at least a means for inputting and outputting a value and storing it. An electronic money application 2502 holds the payee value 2301 and executes the payee value delivering means 2302 in Fig. 26. That is, the electronic money application 2502 holds only the value secured for the payment and delivers it to the payment server.

The payee value creating means 2304, simultaneously with creation of the bill information, issues an instruction to shift a value equivalent to the money amount contained in the bill information from the electronic money application 2501 to the electronic money application 2502. In Fig. 25, the payee value creating means 2304 issues the instruction to the electronic money application 2501 to move the value to the electronic money application 2502. However, the payee value creating means 2304 may issue the instruction to the electronic money application 2502 to move the value from the electronic money application 2501.

The operation of the step 2701 in Fig. 27 carried out by the bill information delivering means 110 is as follows. That is, the bill information delivering means 110 issues the instruction to the electronic money application 2502 (having the function of the payee value delivering means 2302) to deliver the value to an electronic money application 2503. However, the instruction of delivering the value from the electronic money application 2502 to the electronic money application 2503 may be issued from the payment procedure executing means 116 after the bill information delivering means 110 delivers the bill information 107 to 109.

The electronic money application 2503 corresponds to the payee value 2303 in Fig. 26, that is, functions to accept and manage the value of the electronic money application 2503 delivered through the payment client 114. It is assumed here that though electronic money application 2501 to 2503 can be transferred between other electronic money applications and received therefrom, the value can be transferred only the electronic money application having a specific authorization. The electronic money application 2503 is also assumed here to be the electronic money application having the authorization. With such an arrangement, a fee to be paid through the execution of the pay operation is managed by the electronic money application 2502, and in ordinary applications, the payment server 115 can collect the value of the pay operation without consuming the value of the electronic money application 2502.

The system of Fig. 25, as in the eighth embodiment, is advantageous in that since the need for provision of the function of managing the bill information and the value corresponding to the same amount as the money amount information specified in the bill information can be eliminated, an existing electronic money not having such a function can be used without any modification.

In the eighth embodiment, when there exist the valued bill information 2103 to 2105 as well as the electronic money application having the function of the valued-bill information delivering means 2107, the valued bill information 2103 to 2105 and valued-bill information delivering means 2107 can be replaced by this electronic money application. However, when this function is not present in the electronic money application, it becomes necessary to develop a new application which can represent the valued bill information 2103 to 2105 and valued-bill information delivering means 2107. In the present embodiment, when the electronic money application (e.g., 2502 in this example) can have only a function of being capable of communicating with the electronic money application alone (2503 in this example) having the specific predetermined authority, the payment server 115 can collect the fee of the pay operation.

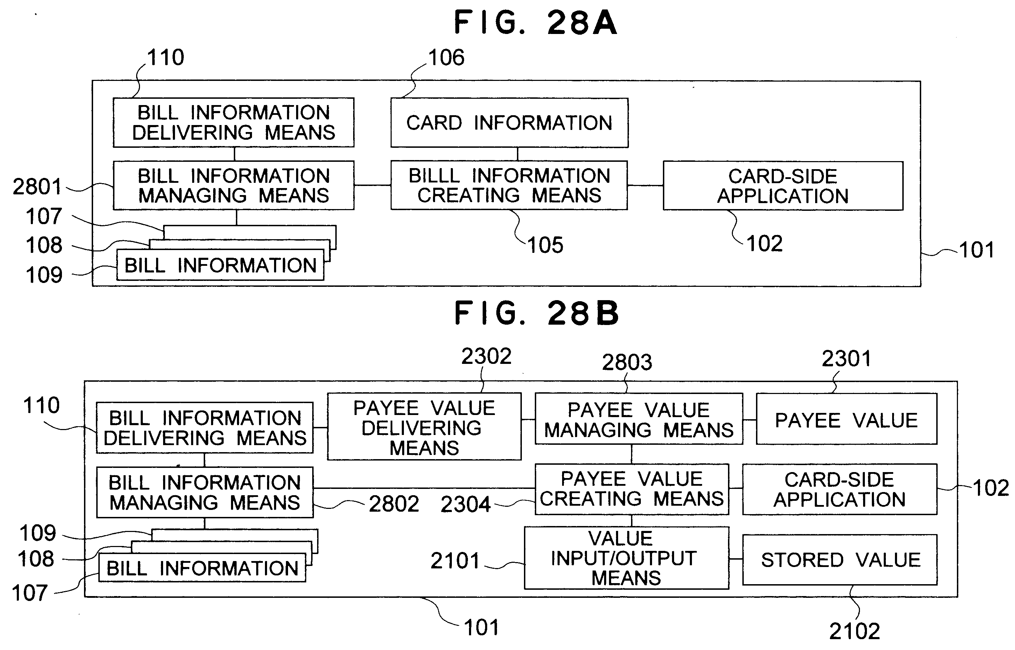

Figs. 28A and 28B shows two different forms of the IC card 101. In this example, bill information managing means 2801 and 2802 are provided. The bill information managing means manage to prevent the bill information and value from being illegally processed (e.g., issuance, deletion, etc.), which will be detailed below.

The bill information creating means 105 creates bill information and stores the created bill information in the IC card 101, and the bill information delivering means 110 delivers the bill information to the on-line terminal 113 to delete the delivered bill information from the IC card. However, as in Fig. 28A, the bill information managing means 2801 may be arranged to store, extract or delete such bill information.

In this case, the bill information creating means 105 and bill information delivering means 110 issue an instruction to the bill information managing means 2801 for the storage, extraction or deletion of the bill information.

Further, there may be employed such an arrangement that the bill information managing means 2801, based on a password authentication system, authenticates the party which store, extract or delete the bill information, can store the bill information when required only by the bill information creating means 105 and can extract or delete the bill information when required only by the bill information delivering means 110. Thereby the bill information managing means 2801 can have a function of avoiding that the bill information be illegally stored, modified or deleted. As a matter of course, when the request party is reliable (as when the bill information creating means 105, bill information delivering means 110 and bill information managing means 2801 are provided in the form of a single program which cannot accept a request from the other programs), authentication becomes unnecessary.

The management of storage, extraction, deletion, etc. of the valued bill information in Fig. 21 can also be implemented by providing a similar management means to the above. The bill information managing means 2802 shown in Fig. 28B is similarly an example wherein a bill information managing means is provided in the IC card 101 in Fig. 23.

With regard to the payee value 2301 in Fig. 23, such a payee value managing means as denoted by 2803 may be provided. In the example of Fig. 23, the payee value 2301 is created by the payee value creating means 2304, after which the created value is added to the payee value 2301. However, when the payee value managing means 2803 is provided, the payee value creating means 2304 is only required to pass the created payee value 2301 to the payee value managing means 2803. The payee value managing means 2803 adds the accepted payee value to the payee value 2301. At this time, the payee value managing means 2803 can confirm if necessary that the payee value to be accepted is due. Further, although the payee value delivering means 2302 has accepted and deleted the payee value 2301, the payee value delivering means 2302 may issue only an extraction request to the payee value managing means 2803 and the payee value managing means 2803 may perform its deleting operation. In this connection, when the payee value 2301 can be arranged to be deleted only by the payee value managing means 2803 to authenticate that the party issuing the extraction request of the payee value 2301 is correct, the payee value managing means 2803 can have a function of preventing the payee value 2301 from being illegally extracted or deleted.

In accordance with the present invention, there can be provided a fee settlement system and apparatus which can offer and acquire pay services based on computers even from an off-line computer terminal to a computer or organization having a payment means to providers of the pay services, and which can also commonly use a plurality of services.

## Claims

1. An information processing apparatus capable of processing one or more operations, comprising:
means for receiving information on a pay service from another information processing apparatus; and
memory means for storing information about a consideration or value for the received pay operation, the stored information being impossible to be used by a user of said pay operation.

2. An information processing apparatus as set forth in claim 1, wherein said memory means is a storage physically separated from the information processing apparatus.

3. An information processing apparatus as set forth in claim 2, wherein a plurality of the information processing apparatuses can store information in the single storage.

4. An information processing apparatus as set forth in claim 1, further comprising means for delivering information on said stored value when connected to a second information processing apparatus having a settlement function about said value information.

5. An information processing apparatus as set forth in claim 1, wherein the information on said stored value includes negotiable information having a money value.

6. An information processing apparatus as set forth in claim 1, wherein the information on said stored value includes bill information indicative of a bill for said pay service.

7. An information processing apparatus as set forth in claim 6, wherein the delivered information is deleted from said information processing apparatus.

8. An information processing apparatus as set forth in claim 7, wherein, when the information on said value is delivered to said second information processing apparatus, information indicative of authenticated delivery is issued.

9. An information processing method in an information processing apparatus capable of executing a pay operation, comprising the steps of:
receiving information on a pay operation from a pay information provider connected thereto;
creating information about a consideration or value for information relating to the received pay operation;
storing the created information in a memory; and
transmitting the stored information to another information processing apparatus having a settlement function when connected thereto.

10. An information processing method as set forth in claim 9, wherein said creating step is carried out by creating information about a value corresponding to a type of the pay operation.

11. An information processing method as set forth in claim 9, wherein said other information processing apparatus performs pay operation for the delivered information.

12. An information processing method as set forth in claim 9, wherein said other information processing apparatus sends the delivered information to another information processing apparatus capable of performing pay operation

13. An information processing method as set forth in claim 9, wherein the information on said value contains negotiable information having a money value.

14. An information processing method as set forth in claim 9, wherein said information contains bill information indicative of billing the value.

15. An IC card which receives information on a pay operation from a terminal connected thereto, creates information on a value corresponding to the received pay operation information, stores the created information in a predetermined area, and stores the stored information in a program from which the information is to be sent.
